(19) Europäisches Patentamt
European Patent Office
Office européen des brevets

(11) **EP 4 611 325 A1**

(12) **EUROPEAN PATENT APPLICATION**
published in accordance with Art. 153(4) EPC

(43) Date of publication:
**03.09.2025 Bulletin 2025/36**

(21) Application number: **22965534.5**

(22) Date of filing: **17.11.2022**

(51) International Patent Classification (IPC):
***H04L 27/00*** (2006.01)

(52) Cooperative Patent Classification (CPC):
**H04L 27/00**

(86) International application number:
**PCT/CN2022/132654**

(87) International publication number:
**WO 2024/103352 (23.05.2024 Gazette 2024/21)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Huawei Technologies Co., Ltd.
Shenzhen, Guangdong 518129 (CN)**

(72) Inventors:
• HU, Bin
  **Shenzhen, Guangdong 518129 (CN)**
• ZHANG, Gongzheng
  **Shenzhen, Guangdong 518129 (CN)**
• WANG, Jian
  **Shenzhen, Guangdong 518129 (CN)**
• LI, Rong
  **Shenzhen, Guangdong 518129 (CN)**

(74) Representative: **Gill Jennings & Every LLP
The Broadgate Tower
20 Primrose Street
London EC2A 2ES (GB)**

(54) **COMMUNICATION METHOD, APPARATUS AND SYSTEM**

(57)     Embodiments of this application provide a communication method, apparatus, and system. The method may include: A reference signal receive end receives a first reference signal. The reference signal receive end inputs the first reference signal into a first target model for processing, to obtain K first target branch adaptation layers and weights of the K first target branch adaptation layers in the first target model. The first target model includes N first target branch adaptation layers. The reference signal receive end further receives first data. Then, the reference signal receive end inputs the first data into the K first target branch adaptation layers for processing, to obtain processed data. A largest weight in the weights of the K first target branch adaptation layers is not less than a preset value. Actual channel distribution is represented based on the determined K first target branch adaptation layers and K weights, to cope with a dynamic channel change. This can improve system performance.

FIG. 2a

## Description

## TECHNICAL FIELD

This application relates to the field of communication technologies, and in particular, to a communication method, apparatus, and system.

## BACKGROUND

In recent years, development of deep learning has led to research on a deep learning-based wireless communication technology in the academia and industry. A research result proves that a deep learning technology can improve performance of a wireless communication system, and has potential to be applied to a physical layer to perform interference adjustment, channel estimation, signal detection, signal processing, and other aspects.

A neural network transceiver optimizes a specific performance indicator and a specific channel model by using a combination of a transmit end and a receive end, to implement a customized self-evolving air interface without using prior expert knowledge, and approach a Shannon limit. However, in an actual channel scenario application, channel distribution dynamically changes. Therefore, a neural network model needs to be capable of determining a channel change in a current environment and quickly adapting to a new scenario with low training overheads.

To resolve a problem caused by the change of the channel distribution, ParkS et al. provide a meta-autoencoder network structure according to a meta-learning method. In this solution, end-to-end training under various channels is separately used as a subtask, to train an initial transmit/receive-end network that has potential under various channels. A training objective of a main task is to obtain an optimal network initialization parameter, so that a system can converge training under any channel in a small quantity of stochastic gradient descent (Stochastic Gradient Descent, SGD) steps, and quickly adapt to a change of a time-varying channel.

Because the channel distribution in an actual scenario dynamically changes, the channel distribution may not exist in an existing subtask in the meta-learning method. Therefore, more subtasks need to be iteratively calculated, resulting in high calculation overheads of training. In addition, channel statuses in all subtasks need to be calculated in each round of iteration. Therefore, each subtask needs to be trained to obtain feedback, which is more time-consuming.

## SUMMARY

This application discloses a communication method, apparatus, and system, to resolve a problem of neural network training and derivation caused by a dynamic channel change in an environment.

According to a first aspect, an embodiment of this application provides a communication method. The method may be performed by a communication device, or may be performed by a component (for example, a chip (system)) in the communication device. The method includes: A reference signal receive end receives a first reference signal. Then, the reference signal receive end inputs the first reference signal into a first target model for processing, to obtain K first target branch adaptation layers and weights of the K first target branch adaptation layers in the first target model. The first target model includes N first target branch adaptation layers, K is not greater than N, and both K and N are positive integers. The reference signal receive end further sends first information. The first information indicates the K first target branch adaptation layers and the weights of the K first target branch adaptation layers. The K first target branch adaptation layers and the weights of the K first target branch adaptation layers are used by a transmit end to process to-be-sent encoded data.

In this embodiment of this application, the reference signal receive end determines the K first target branch adaptation layers and the weights of the K first target branch adaptation layers in the N first target branch adaptation layers of the first target model based on the received reference signal. According to this method, actual channel distribution is represented based on the determined K first target branch adaptation layers and K weights, to cope with a dynamic channel change. This can improve system performance.

In a possible implementation, the method further includes: The reference signal receive end receives first data, where the first data is obtained by the transmit end by processing the to-be-sent encoded data. Then, the reference signal receive end inputs the first data into the K first target branch adaptation layers for processing, to obtain processed data.

In a possible implementation, the method further includes: The reference signal receive end sends a first channel dictionary set, where the first channel dictionary set is used by the transmit end to determine a correspondence between the N first target branch adaptation layers and M second target branch adaptation layers of the transmit end, and M is a positive integer.

Dictionary alignment is performed, so that the transmit end selects an optimal processing manner under corresponding channel distribution to process encoded data, thereby improving communication performance.

In another possible implementation, the method further includes: The reference signal receive end receives a second channel dictionary set. Then, the reference signal receive end performs dictionary alignment between a first channel dictionary set and the second channel dictionary set, to obtain a correspondence between a second target branch adaptation layer in the second channel dictionary set and a first target branch adaptation layer in the first channel dictionary set. Finally, the reference signal receive end sends first indication information, where the first indication information indicates the correspondence between the second target branch adaptation layer in the second channel dictionary set and the first target branch adaptation layer in the first channel dictionary set.

Dictionary alignment is performed, so that the transmit end selects an optimal processing manner under corresponding channel distribution to process encoded data, thereby improving communication performance.

In a possible implementation, the first channel dictionary set includes a correspondence between a first target branch adaptation layer and a channel label.

In a possible implementation, the method further includes: The reference signal receive end receives a second reference signal. Then, the reference signal receive end sends third information, where the third information is the same as the first information, or the third information indicates the transmit end to send a reference signal after an interval of first time. The third information is obtained based on the second reference signal. Finally, the reference signal receive end receives data sent by the transmit end within the first time.

That the transmit end sends the data within the first time may be understood as that the transmit end does not send a reference signal within the first time. In this way, pilot transmission overheads can be reduced, and spectral efficiency of data transmission can be improved.

According to a second aspect, an embodiment of this application provides a communication method. The method may be performed by a communication device, or may be performed by a component (for example, a chip (system)) in the communication device. The method includes: A reference signal receive end receives a first reference signal. Then, the reference signal receive end inputs the first reference signal into a first target model for processing, to obtain K first target branch adaptation layers and weights of the K first target branch adaptation layers in the first target model. The first target model includes N first target branch adaptation layers, K is not greater than N, and both K and N are positive integers.

The reference signal receive end further sends fourth information, where the fourth information indicates K second target branch adaptation layers and weights of the K second target branch adaptation layers. The K second target branch adaptation layers and the weights of the K second target branch adaptation layers are used by a transmit end to process to-be-sent encoded data. The K second target branch adaptation layers and the weights of the K second target branch adaptation layers are determined based on the K first target branch adaptation layers and the weights of the K first target branch adaptation layers.

In this embodiment of this application, the reference signal receive end determines the K first target branch adaptation layers and the weights of the K first target branch adaptation layers in the N first target branch adaptation layers of the first target model based on the received reference signal. Then, the K second target branch adaptation layers and the weights of the K second target branch adaptation layers are indicated to the transmit end. According to this method, actual channel distribution is represented based on the determined K first target branch adaptation layers and K weights, to cope with a dynamic channel change. This can improve system performance. In addition, through the indication to the transmit end, the transmit end processes the to-be-sent encoded data. This can improve communication performance.

In a possible implementation, the method further includes: The reference signal receive end receives first data. The first data is obtained by the transmit end by processing the to-be-sent encoded data.

The reference signal receive end further inputs the first data into the K first target branch adaptation layers for processing, to obtain processed data.

In a possible implementation, the method further includes: The reference signal receive end sends a first channel dictionary set, where the first channel dictionary set is used by the transmit end to determine a correspondence between the N first target branch adaptation layers and M second target branch adaptation layers of the transmit end, and M is a positive integer. The reference signal receive end further receives first indication information, where the first indication information indicates a correspondence between a second target branch adaptation layer in a second channel dictionary set and a first target branch adaptation layer in the first channel dictionary set.

Dictionary alignment is performed, so that the reference signal receive end may determine the K second target branch adaptation layers and the weights of the K second target branch adaptation layers, to indicate the transmit end to process encoded data in an optimal processing manner under corresponding channel distribution, so that communication performance can be improved.

In another possible implementation, the method further includes: The reference signal receive end receives a second channel dictionary set. Then, the reference signal receive end performs dictionary alignment between a first channel dictionary set and the second channel dictionary set, to obtain a correspondence between a second target branch adaptation layer in the second channel dictionary set and a first target branch adaptation layer in the first channel dictionary set.

Dictionary alignment is performed, so that the reference signal receive end may determine the K second target branch adaptation layers and the weights of the K second target branch adaptation layers, to indicate the transmit end to process encoded data in an optimal processing manner under corresponding channel distribution, so that communication performance can be improved.

In a possible implementation, the first channel dictionary set includes a correspondence between a first target branch adaptation layer and a channel label.

In a possible implementation, the method further includes: The reference signal receive end receives a second reference signal. Then, the reference signal receive end sends fifth information, where the fifth information is the same as the fourth information, or the fifth information indicates the transmit end to send a reference signal after an interval of first time, and the fifth information is obtained based on the second reference signal. The reference signal receive end further receives data sent by the transmit end within the first time.

That the transmit end sends the data within the first time may be understood as that the transmit end does not send a reference signal within the first time. In this way, pilot transmission overheads can be reduced, and spectral efficiency of data transmission can be improved.

According to a third aspect, an embodiment of this application provides a communication method. The method may be performed by a communication device, or may be performed by a component (for example, a chip (system)) in the communication device. The method includes: A transmit end sends a first reference signal. Then, the transmit end receives first information, where the first information indicates K first target branch adaptation layers and weights of the K first target branch adaptation layers in a first target model at a receive end of the first reference signal. The first information is obtained based on the first reference signal, and K is a positive integer.

In this embodiment of this application, the information received by the transmit end indicates the K first target branch adaptation layers and the weights of the K first target branch adaptation layers in the first target model at the receive end of the first reference signal. In this way, actual channel distribution is represented based on the K first target branch adaptation layers and the K weights, to cope with a dynamic channel change. This can improve communication performance.

In a possible implementation, the method further includes: The transmit end determines, based on the first information, K second target branch adaptation layers corresponding to the K first target branch adaptation layers and weights of the K second target branch adaptation layers. Then, the transmit end inputs to-be-sent encoded data into the K second target branch adaptation layers in a second target model for processing, to obtain first data. Finally, the transmit end sends the first data.

In a possible implementation, when M is less than K, the transmit end updates a third target model, to obtain the second target model, where the second target model includes the K second target branch adaptation layers. The third target model includes M second target branch adaptation layers, and M is a positive integer.

In this way, the corresponding target branch adaptation layers and weights can be determined based on the received information, to process encoded data, so that communication performance can be improved.

In a possible implementation, the method further includes: The transmit end receives a first channel dictionary set. Then, the transmit end performs dictionary alignment between the first channel dictionary set and a second channel dictionary set, to obtain a correspondence between a second target branch adaptation layer in the second channel dictionary set and a first target branch adaptation layer in the first channel dictionary set.

The channel dictionary set is received, so that dictionary alignment is performed at the two ends, and then an optimal processing manner may be selected under corresponding channel distribution to process encoded data, thereby improving communication performance.

In another possible implementation, the method further includes: The transmit end sends a second channel dictionary set. The transmit end further receives first indication information, where the first indication information indicates a correspondence between a second target branch adaptation layer in the second channel dictionary set and a first target branch adaptation layer in a first channel dictionary set.

Dictionary alignment is performed, so that the transmit end selects an optimal processing manner under corresponding channel distribution to process encoded data, thereby improving communication performance.

In a possible implementation, the second channel dictionary set includes a correspondence between a second target branch adaptation layer and the channel label.

In a possible implementation, the method further includes: The transmit end sends a second reference signal. Then, the transmit end receives third information, where the third information is the same as the first information, or the third information indicates to send a reference signal after an interval of first time. The third information is obtained based on the second reference signal. Finally, the transmit end sends data within the first time.

That the transmit end sends the data within the first time may be understood as that the transmit end does not send a reference signal within the first time. In this way, pilot transmission overheads can be reduced, and spectral efficiency of data transmission can be improved.

According to a fourth aspect, an embodiment of this application provides a communication method. The method may be performed by a communication device, or may be performed by a component (for example, a chip (system)) in the communication device. The method includes: A transmit end sends a first reference signal. Then, the transmit end receives fourth information. The fourth information indicates K second target branch adaptation layers and weights of the K second target branch adaptation layers. The fourth information is obtained based on the first reference signal, and K is a positive integer.

In this embodiment of this application, the information received by the transmit end indicates the K second target branch adaptation layers and the weights of the K second target branch adaptation layers. In this way, actual channel distribution is represented based on the K target branch adaptation layers and the K weights, to cope with a dynamic channel change. This can improve communication performance.

In a possible implementation, the method further includes:

The transmit end inputs, based on the fourth information, to-be-sent encoded data into the K second target branch adaptation layers in a second target model for processing, to obtain first data.

Then, the transmit end sends the first data.

In this way, the transmit end processes encoded data in an optimal processing manner under corresponding channel distribution, so that communication performance can be improved.

In a possible implementation, the method further includes:

The transmit end receives a first channel dictionary set.

Then, the transmit end performs dictionary alignment between the first channel dictionary set and a second channel dictionary set, to obtain a correspondence between a second target branch adaptation layer in the second channel dictionary set and a first target branch adaptation layer in the first channel dictionary set.

The transmit end further sends first indication information, where the first indication information indicates the correspondence between the second target branch adaptation layer in the second channel dictionary set and the first target branch adaptation layer in the first channel dictionary set.

The channel dictionary set is received, so that dictionary alignment is performed at the two ends, and a reference signal receive end is then indicated to determine the corresponding target branch adaptation layers and weights, for the transmit end to process encoded data in an optimal processing manner under corresponding channel distribution. This can improve communication performance.

In another possible implementation, the method further includes:

The transmit end sends a second channel dictionary set, where the second channel dictionary set is used by a reference signal receive end to determine a correspondence between N first target branch adaptation layers of the reference signal receive end and M second target branch adaptation layers of the transmit end, and both M and N are positive integers.

The channel dictionary set is sent, so that the reference signal receive end performs dictionary alignment at the two ends, to determine the corresponding target branch adaptation layers and weights, for the transmit end to process encoded data in an optimal processing manner under corresponding channel distribution. This can improve communication performance.

In a possible implementation, the second channel dictionary set includes a correspondence between a second target branch adaptation layer and the channel label.

In a possible implementation, the method further includes:

The transmit end sends a second reference signal.

Then, the transmit end receives fifth information, where the fifth information is the same as the fourth information, or the fifth information indicates to send a reference signal after an interval of first time, and the fifth information is obtained based on the second reference signal.

The transmit end sends data within the first time.

That the transmit end sends the data within the first time may be understood as that the transmit end does not send a reference signal within the first time. In this way, pilot transmission overheads can be reduced, and spectral efficiency of data transmission can be improved.

According to a fifth aspect, an embodiment of this application provides a communication method. The method may be performed by a communication device, or may be performed by a component (for example, a chip (system)) in the communication device. The method includes: A reference signal receive end receives a first reference signal. The reference signal receive end inputs the first reference signal into a first target model for processing, to obtain K first target branch adaptation layers and weights of the K first target branch adaptation layers in the first target model. The first target model includes N first target branch adaptation layers, K is not greater than N, and both K and N are positive integers. The reference signal receive end further receives first data. Then, the reference signal receive end inputs the first data into the K first target branch adaptation layers for processing, to obtain processed data. A largest weight in the weights of the K first target branch adaptation layers is not less than a preset value.

In this embodiment of this application, the reference signal receive end determines the K first target branch adaptation layers and the weights of the K first target branch adaptation layers in the N first target branch adaptation layers of the first target model based on the received reference signal. When the largest weight in the weights of the K first target branch adaptation layers is not less than the preset value, the received first data is input into the K first target branch adaptation layers for processing, to obtain the processed data. According to this method, actual channel distribution is represented based on the determined K first target branch adaptation layers and K weights, to cope with a dynamic channel change. This can improve system performance.

In a possible implementation, the first target model further includes a first target channel feature extraction network and a target sparse gating module. The first target channel feature extraction network is used to process the first reference signal, to obtain channel distribution information and channel classification information corresponding to the channel distribution information.

The target sparse gating module is configured to obtain the K first target branch adaptation layers and the weights of the K first target branch adaptation layers through calculation based on the channel distribution information and the channel classification information.

The first target channel feature extraction network and the target sparse gating module may be two independent modules, or may be integrated. This is not limited in this solution.

In a possible implementation, the K first target branch adaptation layers are used to separately process the first data, to obtain data separately processed by the K first target branch adaptation layers.

The weights of the K first target branch adaptation layers are used to perform weighted summation processing on the data separately processed by the K first target branch adaptation layers, to obtain the processed data.

In a possible implementation, the method further includes: When the largest weight in the weights of the K first target branch adaptation layers is less than the preset value, the reference signal receive end decodes the first data, to obtain processed data.

In a possible implementation, the method further includes: The reference signal receive end sends first information. The first information indicates the K first target branch adaptation layers and the weights of the K first target branch adaptation layers. The K first target branch adaptation layers and the weights of the K first target branch adaptation layers are used by a transmit end to process to-be-sent encoded data to obtain the first data.

When the largest weight in the weights of the K first target branch adaptation layers is not less than the preset value, the information is sent to the transmit end, so that the transmit end processes the to-be-sent encoded data and then sends the first data. In this way, the transmit end selects, based on the indication of the information, an optimal processing manner under corresponding channel distribution to process encoded data, so that communication performance can be improved.

In a possible implementation, the method further includes: The reference signal receive end sends second information when the largest weight in the weights of the K first target branch adaptation layers is less than the preset value, where the second information indicates the transmit end to directly send the first data.

In a possible implementation, the method further includes: The reference signal receive end sends a first channel dictionary set, where the first channel dictionary set is used by the transmit end to determine a correspondence between the N first target branch adaptation layers and M second target branch adaptation layers of the transmit end, and M is a positive integer.

The channel dictionary set is sent, so that dictionary alignment is performed at the two ends, and then the transmit end selects an optimal processing manner under corresponding channel distribution to process encoded data, thereby improving communication performance.

In another possible implementation, the method further includes: The reference signal receive end receives a second channel dictionary set. The reference signal receive end performs dictionary alignment between a first channel dictionary set and the second channel dictionary set, to obtain a correspondence between a second target branch adaptation layer in the second channel dictionary set and a first target branch adaptation layer in the first channel dictionary set. Then, the reference signal receive end sends first indication information, where the first indication information indicates the correspondence between the second target branch adaptation layer in the second channel dictionary set and the first target branch adaptation layer in the first channel dictionary set.

Dictionary alignment is performed, so that the transmit end selects an optimal processing manner under corresponding channel distribution to process encoded data, thereby improving communication performance.

In a possible implementation, the method further includes:

The reference signal receive end sends fourth information, where the fourth information indicates K second target branch adaptation layers and weights of the K second target branch adaptation layers. The K second target branch adaptation layers and the weights of the K second target branch adaptation layers are used by the transmit end to process to-be-sent encoded data to obtain the first data. The K second target branch adaptation layers and the weights of the K second target branch adaptation layers are determined based on the K first target branch adaptation layers and the weights of the K first target branch adaptation layers.

In a possible implementation, the method further includes:

The reference signal receive end sends a first channel dictionary set.

The reference signal receive end further receives first indication information. The first indication information indicates a correspondence between a second target branch adaptation layer in a second channel dictionary set and a first target branch adaptation layer in the first channel dictionary set.

In a possible implementation, the method further includes:

The reference signal receive end receives a second channel dictionary set.

The reference signal receive end further performs dictionary alignment between a first channel dictionary set and the second channel dictionary set, to obtain a correspondence between a second target branch adaptation layer in the second channel dictionary set and a first target branch adaptation layer in the first channel dictionary set.

In a possible implementation, the first channel dictionary set includes a correspondence between a first target branch adaptation layer and a channel label.

In a possible implementation, the method further includes: The reference signal receive end receives a second reference signal. Then, the reference signal receive end sends third information, where the third information is the same as the first information, or the third information indicates the transmit end to send a reference signal after an interval of first time. The third information is obtained based on the second reference signal. The reference signal receive end further receives data sent by the transmit end within the first time.

In another possible implementation, the method further includes: The reference signal receive end receives a second reference signal. Then, the reference signal receive end sends fifth information, where the fifth information is the same as the fourth information, or the fifth information indicates the transmit end to send a reference signal after an interval of first time. The fifth information is obtained based on the second reference signal. The reference signal receive end further receives data sent by the transmit end within the first time.

That the transmit end sends the data within the first time may be understood as that the transmit end does not send a reference signal within the first time. In this way, pilot transmission overheads can be reduced, and spectral efficiency of data transmission can be improved. For this example, refer to descriptions of the third information. Details are not described herein again.

According to a sixth aspect, an embodiment of this application provides a communication method. The method may be performed by a communication device, or may be performed by a component (for example, a chip (system)) in the communication device. The method includes: A transmit end sends a first reference signal. When first information is received, and the first information indicates K first target branch adaptation layers and weights of the K first target branch adaptation layers in a first target model at a receive end of the first reference signal, the transmit end determines, based on the first information, K second target branch adaptation layers corresponding to the K first target branch adaptation layers and weights of the K second target branch adaptation layers. The first information is obtained based on the first reference signal, and K is a positive integer. Then, the transmit end inputs to-be-sent encoded data into the K second target branch adaptation layers in a second target model for processing, to obtain first data. Finally, the transmit end sends the first data.

In this embodiment of this application, the transmit end processes the to-be-sent encoded data based on the received information, and then sends the first data. In this way, actual channel distribution is represented based on the determined K first target branch adaptation layers and K weights, to cope with a dynamic channel change; and an optimal processing manner under corresponding channel distribution is selected to process encoded data, so that communication performance can be improved.

In a possible implementation, when M is less than K, the transmit end updates a third target model, to obtain the second target model, where the second target model includes the K second target branch adaptation layers. The third target model includes M second target branch adaptation layers, and M is a positive integer.

In this way, the corresponding target branch adaptation layers and weights can be determined based on the received information, to process encoded data, so that communication performance can be improved.

In a possible implementation, the K second target branch adaptation layers are used to separately process the to-be-sent encoded data, to obtain data separately processed by the K second target branch adaptation layers.

The weights of the K second target branch adaptation layers are used to perform weighted summation processing on the data separately processed by the K second target branch adaptation layers, to obtain the first data.

In a possible implementation, the method further includes: When the transmit end receives second information, and the second information indicates to directly send the to-be-sent encoded data, the transmit end sends the to-be-sent encoded data. The second information is obtained based on the first reference signal.

In a possible implementation, the method further includes: The transmit end receives a first channel dictionary set. Then, the transmit end performs dictionary alignment between the first channel dictionary set and a second channel dictionary set, to obtain a correspondence between a second target branch adaptation layer in the second channel dictionary set and a first target branch adaptation layer in the first channel dictionary set.

The channel dictionary set is received, so that dictionary alignment is performed at the two ends, and then an optimal processing manner may be selected under corresponding channel distribution to process the encoded data, thereby improving communication performance.

In another possible implementation, the method further includes: The transmit end sends a second channel dictionary set. Then, the transmit end receives first indication information, where the first indication information indicates a correspondence between a second target branch adaptation layer in the second channel dictionary set and a first target branch adaptation layer in a first channel dictionary set.

Dictionary alignment is performed, so that the transmit end selects an optimal processing manner under corresponding channel distribution to process encoded data, thereby improving communication performance.

In a possible implementation, the second channel dictionary set includes a correspondence between a second target branch adaptation layer and the channel label.

In a possible implementation, the method further includes: The transmit end sends a second reference signal. Then, the transmit end receives third information, where the third information is the same as the first information. Alternatively, the third information indicates to send a reference signal after an interval of first time. The third information is obtained based on the second reference signal. Finally, the transmit end sends data within the first time.

That the transmit end sends the data within the first time may be understood as that the transmit end does not send a reference signal within the first time. In this way, pilot transmission overheads can be reduced, and spectral efficiency of data transmission can be improved.

According to a seventh aspect, an embodiment of this application provides a communication method. The method may be performed by a communication device, or may be performed by a component (for example, a chip (system)) in the communication device. The method includes: A transmit end sends a first reference signal. Then, when fourth information is received, and the fourth information indicates K second target branch adaptation layers and weights of the K second target branch adaptation layers, the transmit end inputs, based on the fourth information, to-be-sent encoded data into the K second target branch adaptation layers in a second target model for processing, to obtain first data. The fourth information is obtained based on the first reference signal, and K is a positive integer. The transmit end further sends the first data.

In this embodiment of this application, the information received by the transmit end indicates the K second target branch adaptation layers and the weights of the K second target branch adaptation layers. In this way, actual channel distribution is represented based on the K target branch adaptation layers and the K weights, to cope with a dynamic channel change. This can improve communication performance. In addition, the transmit end processes encoded data in an optimal processing manner under corresponding channel distribution, so that communication performance can be improved.

In a possible implementation, the K second target branch adaptation layers are used to separately process the to-be-sent encoded data, to obtain data separately processed by the K second target branch adaptation layers. The weights of the K second target branch adaptation layers are used to perform weighted summation processing on the data separately processed by the K second target branch adaptation layers, to obtain the first data.

In a possible implementation, the method further includes:

When second information is received, and the second information indicates to directly send the to-be-sent encoded data, the transmit end sends the to-be-sent encoded data. The second information is obtained based on the first reference signal.

In a possible implementation, the method further includes:

The transmit end receives a first channel dictionary set. Then, the transmit end performs dictionary alignment between the first channel dictionary set and a second channel dictionary set, to obtain a correspondence between a second target branch adaptation layer in the second channel dictionary set and a first target branch adaptation layer in the first channel dictionary set. The transmit end further sends first indication information, where the first indication information indicates the correspondence between the second target branch adaptation layer in the second channel dictionary set and the first target branch adaptation layer in the first channel dictionary set.

The channel dictionary set is received, so that dictionary alignment is performed at the two ends, and a reference signal receive end is then indicated to determine the corresponding target branch adaptation layers and weights, for the transmit end to process encoded data in an optimal processing manner under corresponding channel distribution. This can improve communication performance.

In a possible implementation, the method further includes:

The transmit end sends a second channel dictionary set, where the second channel dictionary set is used by a reference signal receive end to determine a correspondence between N first target branch adaptation layers of the reference signal receive end and M second target branch adaptation layers of the transmit end, and both M and N are positive integers.

The channel dictionary set is sent, so that the reference signal receive end performs dictionary alignment at the two ends, to determine the corresponding target branch adaptation layers and weights, for the transmit end to process encoded data in an optimal processing manner under corresponding channel distribution. This can improve communication performance.

In a possible implementation, the second channel dictionary set includes a correspondence between a second target branch adaptation layer and the channel label.

In a possible implementation, the method further includes:

The transmit end sends a second reference signal.

Then, the transmit end receives fifth information. The fifth information is the same as the fourth information, or the fifth information indicates to send a reference signal after an interval of first time, and the fifth information is obtained based on the second reference

signal.

The transmit end further sends data within the first time.

That the transmit end sends the data within the first time may be understood as that the transmit end does not send a reference signal within the first time. In this way, pilot transmission overheads can be reduced, and spectral efficiency of data transmission can be improved.

According to an eighth aspect, an embodiment of this application provides a target model training method. The method may be performed by a communication device, or may be performed by a component (for example, a chip (system)) in the communication device. A target model includes a target encoding network, a target decoding network, and a first target model, and the first target model includes a first target channel feature extraction network, N first target branch adaptation layers, and a target sparse gating module. The method includes: training an initial channel feature extraction network, to obtain the first target channel feature extraction network and a first channel dictionary set; then, training N initial branch adaptation layers based on the target encoding network and the target decoding network, to obtain the N first target branch adaptation layers, where N is a quantity of first target branch adaptation layers in the first channel dictionary set; and finally, training an initial sparse gating module based on the target encoding network, the target decoding network, the first target channel feature extraction network, and the N first target branch adaptation layers, to obtain the target sparse gating module.

In this embodiment of this application, the first target channel feature extraction network is obtained by training the initial channel feature extraction network. Then, the N initial branch adaptation layers are trained, to obtain the N first target branch adaptation layers. Finally, the initial sparse gating module is trained based on the trained target encoding network, target decoding network, first target channel feature extraction network, and N first target branch adaptation layers, to obtain the target sparse gating module. The target model obtained by using this method can resolve a problem of neural network training and derivation caused by a dynamic channel change in an environment.

According to another aspect, in this solution, an output of the branch adaptation layer is adjusted by training a weight of the branch adaptation layer, instead of training a parameter of the target encoding network. In this way, network training overheads can be reduced.

Optionally, the first channel dictionary set includes a correspondence between a first target branch adaptation layer and a channel label.

In a possible implementation, the training an initial channel feature extraction network, to obtain the first target channel feature extraction network and a first channel dictionary set includes: training the initial channel feature extraction network for a plurality of times, to obtain the first target channel feature extraction network and the first channel dictionary set. The initial channel feature extraction network is obtained based on labeled historical channel information or by pre-training a preset channel model.

When a channel feature extraction network $U_{t-1}$ is trained for a $t^{th}$ time, both unlabeled channel information and the labeled historical channel information are input into the channel feature extraction network $U_{t-1}$ for processing, to obtain channel distribution information respectively corresponding to the unlabeled channel information and the labeled historical channel information. $N_{t-1}$ clustering centers are obtained based on the channel distribution information. A predicted channel dictionary set is obtained based on the $N_{t-1}$ clustering centers and the channel distribution information. Then, a first loss value is obtained through calculation based on the predicted channel dictionary set and an annotated channel dictionary set, and a parameter of the channel feature extraction network $U_{t-1}$ is adjusted based on the first loss value. $t=t+1$ is made, the foregoing steps are repeatedly performed until a quantity of iterations reaches a preset quantity of times, the channel feature extraction network $U_{t-1}$ is used as the first target channel feature extraction network, and the predicted channel dictionary set is used as the first channel dictionary set.

In a possible implementation, the training N initial branch adaptation layers based on the target encoding network and the target decoding network, to obtain the N first target branch adaptation layers includes: when an $m^{th}$ initial branch adaptation layer is trained for the $t^{th}$ time, inputting first sample data into the target encoding network and a preset channel model for processing, to obtain second sample data; inputting the second sample data into the $m^{th}$ initial branch adaptation layer for processing, to obtain data processed by the $m^{th}$ initial branch adaptation layer, where m is a positive integer, and m is not greater than N; inputting the data processed by the $m^{th}$ initial branch adaptation layer into the target decoding network for processing, to obtain third sample data; then, obtaining a second loss value through calculation based on the first sample data and the third sample data, and adjusting parameters of the $m^{th}$ initial branch adaptation layer based on the second loss value; making $t=t+1$, repeatedly performing the foregoing steps until a stop condition is met, and using the $m^{th}$ initial branch adaptation layer as an $m^{th}$ first target branch adaptation layer; and

making $m=m+1$, and repeatedly performing the foregoing steps until $m=N$, to obtain the N first target branch adaptation layers.

In a possible implementation, the method further includes: sending second indication information, where the second indication information indicates the $m^{th}$ initial branch adaptation layer to be trained.

In a possible implementation, the training an initial sparse gating module based on the target encoding network, the target decoding network, the first target channel feature extraction network, and the N first target branch adaptation layers, to obtain the target sparse gating module includes: training the initial sparse gating module for a plurality of times, to obtain the target sparse gating module.

When a sparse gating module $X_{t-1}$ is trained for the $t^{th}$ time, fourth sample data is input into the target encoding network and the preset channel model for processing, to obtain fifth sample data; the fifth sample data is input into the first target channel feature extraction network for processing, to obtain channel distribution information training data and channel classification information training data; both the channel distribution information training data and the channel classification information training data are input into the sparse gating module $X_{t-1}$ for processing, to obtain R first target branch adaptation layer samples corresponding to the channel distribution information training data and weight samples of the R first target branch adaptation layers, where R is a positive integer, and R is not greater than N; the fifth sample data is processed based on the R first target branch adaptation layer samples and the weight samples of the R first target branch adaptation layers, to obtain processed training data; the processed training data is input into the target decoding network for processing, to obtain sixth sample data; then, a third loss value is obtained through calculation based on the fourth sample data, the sixth sample data, and the weight samples of the R first target branch adaptation layers, and a parameter of the sparse gating module $X_{t-1}$ is adjusted based on the third loss value; and t=t+1 is made, the foregoing steps are repeatedly performed until a stop condition is met, and the sparse gating module $X_{t-1}$ is used as the target sparse gating module.

According to a ninth aspect, this application provides a communication apparatus, including: a communication module, configured to receive a first reference signal; and a processing module, configured to input the first reference signal into a first target model for processing, to obtain K first target branch adaptation layers and weights of the K first target branch adaptation layers in the first target model, where the first target model includes N first target branch adaptation layers, K is not greater than N, and both K and N are positive integers, where the communication module is further configured to send first information, where the first information indicates the K first target branch adaptation layers and the weights of the K first target branch adaptation layers, and the K first target branch adaptation layers and the weights of the K first target branch adaptation layers are used by a transmit end to process to-be-sent encoded data.

In a possible implementation, the communication module is further configured to receive first data, where the first data is obtained by the transmit end by processing the to-be-sent encoded data; and the processing module is further configured to input the first data into the K first target branch adaptation layers for processing, to obtain processed data.

In a possible implementation, the communication module is further configured to send a first channel dictionary set, where the first channel dictionary set is used by the transmit end to determine a correspondence between the N first target branch adaptation layers and M second target branch adaptation layers of the transmit end, and M is a positive integer.

In another possible implementation, the communication module is further configured to receive a second channel dictionary set. The processing module is further configured to perform dictionary alignment between a first channel dictionary set and the second channel dictionary set, to obtain a correspondence between a second target branch adaptation layer in the second channel dictionary set and a first target branch adaptation layer in the first channel dictionary set. The communication module is further configured to send first indication information, where the first indication information indicates the correspondence between the second target branch adaptation layer in the second channel dictionary set and the first target branch adaptation layer in the first channel dictionary set.

In a possible implementation, the first channel dictionary set includes a correspondence between a first target branch adaptation layer and a channel label.

In a possible implementation, the communication module is further configured to: receive a second reference signal; send third information, where the third information is the same as the first information, or the third information indicates the transmit end to send a reference signal after an interval of first time, and the third information is obtained based on the second reference signal; and receive data sent by the transmit end within the first time.

According to a tenth aspect, this application provides a communication apparatus, including:

a communication module, configured to receive a first reference signal; and
a processing module, configured to input the first reference signal into a first target model for processing, to obtain K first target branch adaptation layers and weights of the K first target branch adaptation layers in the first target model, where the first target model includes N first target branch adaptation layers, K is not greater than N, and both K and N are positive integers, where
the communication module is further configured to send fourth information, where the fourth information indicates K second target branch adaptation layers and weights of the K second target branch adaptation layers, the K second target branch adaptation layers and the weights of the K second target branch adaptation layers are used by a transmit end to process to-be-sent encoded data, and the K second target branch adaptation layers and the weights of the K second target branch adaptation layers are determined based on the K first target branch adaptation layers and the weights of the K first target branch adaptation layers.

In a possible implementation, the communication module is further configured to:
receive first data, where the first data is obtained by the transmit end by processing the to-be-sent encoded data.

The processing module is further configured to input the first data into the K first target branch adaptation layers for processing, to obtain processed data.

In a possible implementation, the communication module is further configured to:

send a first channel dictionary set, where the first channel dictionary set is used by the transmit end to determine a correspondence between the N first target branch adaptation layers and M second target branch adaptation layers of the transmit end, and M is a positive integer; and
receive first indication information, where the first indication information indicates a correspondence between a second target branch adaptation layer in a second channel dictionary set and a first target branch adaptation layer in the first channel dictionary set.

In a possible implementation, the communication module is further configured to:
receive a second channel dictionary set.

The processing module is further configured to perform dictionary alignment between a first channel dictionary set and the second channel dictionary set, to obtain a correspondence between a second target branch adaptation layer in the second channel dictionary set and a first target branch adaptation layer in the first channel dictionary set.

In a possible implementation, the first channel dictionary set includes a correspondence between a first target branch adaptation layer and a channel label.

In a possible implementation, the communication module is further configured to:

receive a second reference signal;
send fifth information, where the fifth information is the same as the fourth information, or the fifth information indicates the transmit end to send a reference signal after an interval of first time, and the fifth information is obtained based on the second reference signal; and
receive data sent by the transmit end within the first time.

According to an eleventh aspect, this application provides a communication apparatus, including: a communication module, configured to send a first reference signal, where the communication module is further configured to receive first information, where the first information indicates K first target branch adaptation layers and weights of the K first target branch adaptation layers in a first target model at a receive end of the first reference signal, the first information is obtained based on the first reference signal, and K is a positive integer.

In a possible implementation, the apparatus further includes: a processing module, configured to determine, based on the first information, K second target branch adaptation layers corresponding to the K first target branch adaptation layers and weights of the K second target branch adaptation layers, where the processing module is further configured to input to-be-sent encoded data into the K second target branch adaptation layers in a second target model for processing, to obtain first data. The communication module is further configured to send the first data.

In a possible implementation, when M is less than K, the processing module is further configured to update a third target model, to obtain the second target model, where the second target model includes the K second target branch adaptation layers, and the third target model includes M second target branch adaptation layers, and M is a positive integer.

In a possible implementation, the communication module is further configured to receive a first channel dictionary set. The processing module is further configured to perform dictionary alignment between the first channel dictionary set and a second channel dictionary set, to obtain a correspondence between a second target branch adaptation layer in the second channel dictionary set and a first target branch adaptation layer in the first channel dictionary set.

In another possible implementation, the communication module is further configured to: send a second channel dictionary set; and receive first indication information, where the first indication information indicates a correspondence between a second target branch adaptation layer in the second channel dictionary set and a first target branch adaptation layer in a first channel dictionary set.

In a possible implementation, the second channel dictionary set includes a correspondence between a second target branch adaptation layer and the channel label.

In a possible implementation, the communication module is further configured to: send a second reference signal; receive fifth information, where the fifth information is the same as the fourth information, or the fifth information indicates to send a reference signal after an interval of first time, and the fifth information is obtained based on the second reference signal; and send data within the first time.

According to a twelfth aspect, this application provides a communication apparatus, including:

a communication module, configured to send a first reference signal, where
the communication module is further configured to receive fourth information, where the fourth information indicates K second target branch adaptation layers and weights of the K second target branch adaptation layers, the fourth information is obtained based on the first reference signal, and K is a positive integer.

In a possible implementation, the apparatus further includes: a processing module, configured to: input, based on the fourth information, to-be-sent encoded data into the K second target branch adaptation layers in a second target model for processing, to obtain first data.

The communication module is further configured to send the first data.

In a possible implementation, the communication module is further configured to: receive a first channel dictionary set.

The processing module is further configured to perform dictionary alignment between the first channel dictionary set and a second channel dictionary set, to obtain a correspondence between a second target branch adaptation layer in the second channel dictionary set and a first target branch adaptation layer in the first channel dictionary set.

The communication module is further configured to send first indication information, where the first indication information indicates the correspondence between the second target branch adaptation layer in the second channel dictionary set and the first target branch adaptation layer in the first channel dictionary set.

In a possible implementation, the communication module is further configured to: send a second channel dictionary set, where the second channel dictionary set is used by a reference signal receive end to determine a correspondence between N first target branch adaptation layers of the reference signal receive end and M second target branch adaptation layers of the transmit end, and both M and N are positive integers.

In a possible implementation, the second channel dictionary set includes a correspondence between a second target branch adaptation layer and the channel label.

In a possible implementation, the communication module is further configured to:

 send a second reference signal;
 receive fifth information, where the fifth information is the same as the fourth information, or the fifth information indicates to send a reference signal after an interval of first time, and the fifth information is obtained based on the second reference signal; and
 send data within the first time.

According to a thirteenth aspect, this application provides a communication apparatus, including: a communication module, configured to receive a first reference signal; and a processing module, configured to input the first reference signal into a first target model for processing, to obtain K first target branch adaptation layers and weights of the K first target branch adaptation layers in the first target model, where the first target model includes N first target branch adaptation layers, K is not greater than N, and both K and N are positive integers, where the communication module is further configured to receive first data; and the processing module is further configured to input the first data into the K first target branch adaptation layers for processing, to obtain processed data, where a largest weight in the weights of the K first target branch adaptation layers is not less than a preset value.

In a possible implementation, the first target model further includes a first target channel feature extraction network and a target sparse gating module, and the first target channel feature extraction network is configured to process the first reference signal, to obtain channel distribution information and channel classification information corresponding to the channel distribution information. The target sparse gating module is configured to obtain the K first target branch adaptation layers and the weights of the K first target branch adaptation layers through calculation based on the channel distribution information and the channel classification information.

In a possible implementation, the K first target branch adaptation layers are used to separately process the first data, to obtain data separately processed by the K first target branch adaptation layers. The weights of the K first target branch adaptation layers are used to perform weighted summation processing on the data separately processed by the K first target branch adaptation layers, to obtain the processed data.

In a possible implementation, the processing module is further configured to: when the largest weight in the weights of the K first target branch adaptation layers is less than the preset value, decode the first data, to obtain processed data.

In a possible implementation, the communication module is further configured to send first information, where the first information indicates the K first target branch adaptation layers and the weights of the K first target branch adaptation layers, and the K first target branch adaptation layers and the weights of the K first target branch adaptation layers are used by a transmit end to process to-be-sent encoded data to obtain the first data.

In a possible implementation, the communication module is further configured to send second information when the largest weight in the weights of the K first target branch adaptation layers is less than the preset value, where the second information indicates the transmit end to directly send the first data.

In a possible implementation, the communication module is further configured to send a first channel dictionary set, where the first channel dictionary set is used by the transmit end to determine a correspondence between the N first target branch adaptation layers and M second target branch adaptation layers of the transmit end, and M is a positive integer.

In another possible implementation, the communication module is further configured to receive a second channel dictionary set. The processing module is further configured to perform dictionary alignment between a first channel dictionary set and the second channel dictionary set, to obtain a correspondence between a second target branch adaptation layer in the second channel dictionary set and a first target branch adaptation layer in the first channel dictionary set. The communication module is further configured to send first indication information, where the first indication information indicates the correspondence between the second target branch adaptation layer in the second channel dictionary set and the first target branch adaptation layer in the first channel dictionary set.

In a possible implementation, the communication module is further configured to:

send fourth information, where the fourth information indicates K second target branch adaptation layers and weights of the K second target branch adaptation layers, the K second target branch adaptation layers and the weights of the K second target branch adaptation layers are used by a transmit end to process to-be-sent encoded data to obtain the first data, and the K second target branch adaptation layers and the weights of the K second target branch adaptation layers are determined based on the K first target branch adaptation layers and the weights of the K first target branch adaptation layers.

In a possible implementation, the communication module is further configured to:

send a first channel dictionary set; and
receive first indication information, where the first indication information indicates a correspondence between a second target branch adaptation layer in a second channel dictionary set and a first target branch adaptation layer in the first channel dictionary set.

In another possible implementation, the communication module is further configured to:
receive a second channel dictionary set.

The processing module is further configured to perform dictionary alignment between a first channel dictionary set and the second channel dictionary set, to obtain a correspondence between a second target branch adaptation layer in the second channel dictionary set and a first target branch adaptation layer in the first channel dictionary set.

In a possible implementation, the first channel dictionary set includes a correspondence between a first target branch adaptation layer and a channel label.

In a possible implementation, the communication module is further configured to: receive a second reference signal; send third information, where the third information is the same as the first information, or the third information indicates the transmit end to send a reference signal after an interval of first time, and the third information is obtained based on the second reference signal; and receive data sent by the transmit end within the first time.

In another possible implementation, the communication module is further configured to: receive a second reference signal; send fifth information, where the fifth information is the same as the fourth information, or the fifth information indicates the transmit end to send a reference signal after an interval of first time, and the fifth information is obtained based on the second reference signal; and receive data sent by the transmit end within the first time.

According to a fourteenth aspect, this application provides a communication apparatus, including: a communication module, configured to send a first reference signal; and a processing module, configured to: when first information is received, and the first information indicates K first target branch adaptation layers and weights of the K first target branch adaptation layers in a first target model at a receive end of the first reference signal, determine, based on the first information, K second target branch adaptation layers corresponding to the K first target branch adaptation layers and weights of the K second target branch adaptation layers, where the first information is obtained based on the first reference signal, and K is a positive integer, where the processing module is further configured to input to-be-sent encoded data into the K second target branch adaptation layers in a second target model for processing, to obtain first data. The communication module is further configured to send the first data.

In a possible implementation, when M is less than K, the processing module is further configured to update a third target model, to obtain the second target model, where the second target model includes the K second target branch adaptation layers, and the third target model includes M second target branch adaptation layers, and M is a positive integer.

In a possible implementation, the K second target branch adaptation layers are used to separately process the to-be-sent encoded data, to obtain data separately processed by the K second target branch adaptation layers. The weights of the K second target branch adaptation layers are used to perform weighted summation processing on the data separately processed by the K second target branch adaptation layers, to obtain the first data.

In a possible implementation, the communication module is further configured to: when second information is received, and the second information indicates to directly send the to-be-sent encoded data, send the to-be-sent encoded data, where the second information is obtained based on the first reference signal.

In a possible implementation, the communication module is further configured to receive a first channel dictionary set; and the processing module is further configured to perform dictionary alignment between the first channel dictionary set and a second channel dictionary set, to obtain a correspondence between a second target branch adaptation layer in the second channel dictionary set and a first target branch adaptation layer in the first channel dictionary set.

In another possible implementation, the communication module is further configured to: send a second channel dictionary set; and receive first indication information, where the first indication information indicates a correspondence between a second target branch adaptation layer in the second channel dictionary set and a first target branch adaptation layer in a first channel dictionary set.

In a possible implementation, the second channel dictionary set includes a correspondence between a second target branch adaptation layer and the channel label.

In a possible implementation, the communication module is further configured to: send a second reference signal; receive third information, where the third information is the same as the first information, or the third information indicates to send a reference signal after an interval of first time, and the third information is obtained based on the second reference signal; and send data within the first time.

According to a fifteenth aspect, this application provides a communication apparatus, including:

> a communication module, configured to send a first reference signal; and
> a processing module, configured to: when fourth information is received, and the fourth information indicates K second target branch adaptation layers and weights of the K second target branch adaptation layers, input, based on the fourth information, to-be-sent encoded data into the K second target branch adaptation layers in a second target model for processing, to obtain first data, where the fourth information is obtained based on the first reference signal, and K is a positive integer, where
> the communication module is further configured to send the first data.

In a possible implementation, the K second target branch adaptation layers are used to separately process the to-be-sent encoded data, to obtain data separately processed by the K second target branch adaptation layers. The weights of the K second target branch adaptation layers are used to perform weighted summation processing on the data separately processed by the K second target branch adaptation layers, to obtain the first data.

In a possible implementation, the communication module is further configured to:
when second information is received, and the second information indicates to directly send the to-be-sent encoded data, send the to-be-sent encoded data, where the second information is obtained based on the first reference signal.

In a possible implementation, the communication module is further configured to:
receive a first channel dictionary set.

The processing module is further configured to perform dictionary alignment between the first channel dictionary set and a second channel dictionary set, to obtain a correspondence between a second target branch adaptation layer in the second channel dictionary set and a first target branch adaptation layer in the first channel dictionary set.

The communication module is further configured to send first indication information, where the first indication information indicates the correspondence between the second target branch adaptation layer in the second channel dictionary set and the first target branch adaptation layer in the first channel dictionary set.

In another possible implementation, the communication module is further configured to:
send a second channel dictionary set, where the second channel dictionary set is used by a reference signal receive end to determine a correspondence between N first target branch adaptation layers of the reference signal receive end and M second target branch adaptation layers of the transmit end, and both M and N are positive integers.

In a possible implementation, the second channel dictionary set includes a correspondence between a second target branch adaptation layer and the channel label.

In a possible implementation, the processing module is further configured to:

> send a second reference signal;
> receive fifth information, where the fifth information is the same as the fourth information, or the fifth information indicates to send a reference signal after an interval of first time, and the fifth information is obtained based on the second reference signal; and
> send data within the first time.

According to a sixteenth aspect, an embodiment of this application provides a target model training apparatus. A target model includes a target encoding network, a target decoding network, and a first target model, and the first target model includes a first target channel feature extraction network, N first target branch adaptation layers, and a target sparse gating module. The apparatus includes: a first training module, configured to train an initial channel feature extraction network, to obtain the first target channel feature extraction network and a first channel dictionary set; a second training module, configured to train N initial branch adaptation layers based on the target encoding network and the target decoding network, to obtain the N first target branch adaptation layers, where N is a quantity of first target branch adaptation layers in the first channel dictionary set; and a third training module, configured to train an initial sparse gating module based on the target encoding network, the target decoding network, the first target channel feature extraction network, and the N first target branch adaptation layers, to obtain the target sparse gating module.

Optionally, the first channel dictionary set includes a correspondence between a first target branch adaptation layer and a channel label.

In a possible implementation, the first training module is configured to train the initial channel feature extraction network for a plurality of times, to obtain the first target channel feature extraction network and the first channel dictionary set. The initial channel feature extraction network is obtained based on labeled historical channel information or by pre-training a preset channel model.

When a channel feature extraction network $U_{t-1}$ is trained for a $t^{th}$ time, both unlabeled channel information and the labeled historical channel information are input into the channel feature extraction network $U_{t-1}$ for processing, to obtain channel distribution information respectively corresponding to the unlabeled channel information and the labeled historical channel information. $N_{t-1}$ clustering centers are obtained based on the channel distribution information. A predicted channel dictionary set is obtained based on the $N_{t-1}$ clustering centers and the channel distribution information. Then, a first loss value is obtained through calculation based on the predicted channel dictionary set and an annotated channel dictionary set, and a parameter of the channel feature extraction network $U_{t-1}$ is adjusted based on the first loss value. t=t+1 is made, the foregoing steps are repeatedly performed until a quantity of iterations reaches a preset quantity of times, the channel feature extraction network $U_{t-1}$ is used as the first target channel feature extraction network, and the predicted channel dictionary set is used as the first channel dictionary set.

In a possible implementation, the second training module is configured to: when an $m^{th}$ initial branch adaptation layer is trained for the $t^{th}$ time, input first sample data into the target encoding network and the preset channel model for processing, to obtain second sample data; input the second sample data into the $m^{th}$ initial branch adaptation layer for processing, to obtain data processed by the $m^{th}$ initial branch adaptation layer, where m is a positive integer, and m is not greater than N; input the data processed by the $m^{th}$ initial branch adaptation layer into the target decoding network for processing, to obtain third sample data; then, obtain a second loss value through calculation based on the first sample data and the third sample data, and adjust parameters of the $m^{th}$ initial branch adaptation layer based on the second loss value; make t=t+1, repeatedly perform the foregoing steps until a stop condition is met, and use the $m^{th}$ initial branch adaptation layer as an $m^{th}$ first target branch adaptation layer; and

make m=m+1, and repeatedly perform the foregoing steps until m=N, to obtain the N first target branch adaptation layers.

In a possible implementation, the apparatus further includes: a communication module, configured to send second indication information, where the second indication information indicates the $m^{th}$ initial branch adaptation layer to be trained.

In a possible implementation, the third training module is configured to train the initial sparse gating module for a plurality of times, to obtain the target sparse gating module.

When a sparse gating module $X_{t-1}$ is trained for the $t^{th}$ time, fourth sample data is input into the target encoding network and the preset channel model for processing, to obtain fifth sample data; the fifth sample data is input into the first target channel feature extraction network for processing, to obtain channel distribution information training data and channel classification information training data; both the channel distribution information training data and the channel classification information training data are input into the sparse gating module $X_{t-1}$ for processing, to obtain R first target branch adaptation layer samples corresponding to the channel distribution information training data and weight samples of the R first target branch adaptation layers, where R is a positive integer, and R is not greater than N; the fifth sample data is processed based on the R first target branch adaptation layer samples and the weight samples of the R first target branch adaptation layers, to obtain processed training data; the processed training data is input into the target decoding network for processing, to obtain sixth sample data; then, a third loss value is obtained through calculation based on the fourth sample data, the sixth sample data, and the weight samples of the R first target branch adaptation layers, and a parameter of the sparse gating module $X_{t-1}$ is adjusted based on the third loss value; and t=t+1 is made, the foregoing steps are repeatedly performed until a stop condition is met, and the sparse gating module $X_{t-1}$ is used as the target sparse gating module.

For any one of the ninth aspect to the fifteenth aspect, in a possible implementation, the processing module may be a processor, and the communication module may be a transceiver module, a transceiver, or a communication interface. It may be understood that the communication module may be a transceiver in the apparatus, for example, is implemented by using an antenna, a feeder, and a codec in the apparatus. Alternatively, if the communication apparatus is a chip disposed in a device, the communication module may be an input/output interface of the chip, for example, an input/output circuit or pin.

For any implementation of the sixteenth aspect, in a possible implementation, the first training module, the second training module, and the third training module may all be processors.

In a possible implementation, the communication module may be a transceiver module, a transceiver, or a communication interface. It may be understood that the communication module may be a transceiver in the apparatus, for example, is implemented by using an antenna, a feeder, and a codec in the apparatus. Alternatively, if the communication apparatus is a chip disposed in a device, the communication module may be an input/output interface of the chip, for example, an input/output circuit or pin.

According to a seventeenth aspect, an embodiment of this application provides a communication apparatus. The communication apparatus includes one or more processors. The one or more processors are configured to execute a computer program stored in one or more memories, to enable the communication apparatus to implement the method according to any one of the first aspect, the method according to any one of the second aspect, the method according to any one of the third aspect, the method according to any one of the fourth aspect, the method according to any one of the fifth aspect, the method according to any one of the sixth aspect, or the method according to any one of the seventh aspect.

In a possible implementation, the communication apparatus further includes the one or more memories.

In a possible implementation, the communication apparatus is a chip or a chip system.

According to an eighteenth aspect, an embodiment of this application provides a computer-readable storage medium. The computer-readable storage medium stores instructions, and when the instructions are executed by a processor, the method according to any one of the first aspect, the method according to any one of the second aspect, the method according to any one of the third aspect, the method according to any one of the fourth aspect, the method according to any one of the fifth aspect, the method according to any one of the sixth aspect, or the method according to any one of the seventh aspect is implemented.

According to a nineteenth aspect, an embodiment of this application provides a computer program product, including a computer program. When the computer program is executed, the method according to any one of the first aspect, the method according to any one of the second aspect, the method according to any one of the third aspect, the method according to any one of the fourth aspect, the method according to any one of the fifth aspect, the method according to any one of the sixth aspect, or the method according to any one of the seventh aspect is implemented.

According to a twentieth aspect, an embodiment of this application provides a communication system, including the apparatus according to any one of the ninth aspect or the apparatus according to any one of the tenth aspect, and further including the apparatus according to any one of the twelfth aspect. Alternatively, the communication system includes the apparatus according to any one of the eleventh aspect and the apparatus according to any one of the thirteenth aspect. Alternatively, the communication system includes the apparatus according to any one of the fourteenth aspect, and the apparatus according to any one of the fifteenth aspect or the apparatus according to any one of the sixteenth aspect.

It may be understood that, the apparatus according to the ninth aspect, the apparatus according to the tenth aspect, the apparatus according to the eleventh aspect, the apparatus according to the twelfth aspect, the apparatus according to the thirteenth aspect, the apparatus according to the fourteenth aspect, the apparatus according to the fifteenth aspect, the apparatus according to the sixteenth aspect, the apparatus according to the seventeenth aspect, the computer storage medium according to the eighteenth aspect, the computer program product according to the nineteenth aspect, and the system according to the twentieth aspect provided above are all configured to perform the method according to any one of the first aspect, the method according to any one of the second aspect, the method according to any one of the third aspect, the method according to any one of the fourth aspect, the method according to any one of the fifth aspect, the method according to any one of the sixth aspect, the method according to any one of the seventh aspect, or the method according to any one of the eighth aspect. Therefore, for beneficial effect that can be achieved, refer to beneficial effect in the corresponding method. Details are not described herein again.

BRIEF DESCRIPTION OF DRAWINGS

The following describes accompanying drawings used in embodiments of this application.

FIG. 1a is a diagram of an architecture of a communication system according to an embodiment of this application;

FIG. 1b is a diagram of an architecture of a communication system according to an embodiment of this application;

FIG. 1c is a diagram of an architecture of a communication system according to an embodiment of this application;

FIG. 2a is a schematic flowchart of a communication method according to an embodiment of this application;

FIG. 2b is a diagram of a target sparse gating module according to an embodiment of this application;

FIG. 3 is a diagram of a communication system according to an embodiment of this application;

FIG. 4 is a schematic flowchart of another communication method according to an embodiment of this application;

FIG. 5a is a diagram of another communication system according to an embodiment of this application;

FIG. 5b is a diagram of a frame structure according to an embodiment of this application;

FIG. 6a is a schematic flowchart of a target model training method according to an embodiment of this application;

FIG. 6b is a diagram of another frame structure according to an embodiment of this application;

FIG. 7a is a diagram of a structure of a communication apparatus according to an embodiment of this application;

FIG. 7b is a diagram of a structure of another communication apparatus according to an embodiment of this application; and

FIG. 8 is a diagram of a structure of still another communication apparatus according to an embodiment of this application.

## DESCRIPTION OF EMBODIMENTS

The following describes embodiments of this application with reference to accompanying drawings in embodiments of this application. Terms used in implementations of embodiments of this application are merely used to explain specific embodiments of this application, and are not intended to limit this application.

An existing neural network algorithm cannot resolve a problem of a dynamic channel change in an actual environment. Therefore, in view of this, this application provides a communication method, apparatus, and system, to cope with the dynamic channel change, and implement migration and adaptation of an unknown channel.

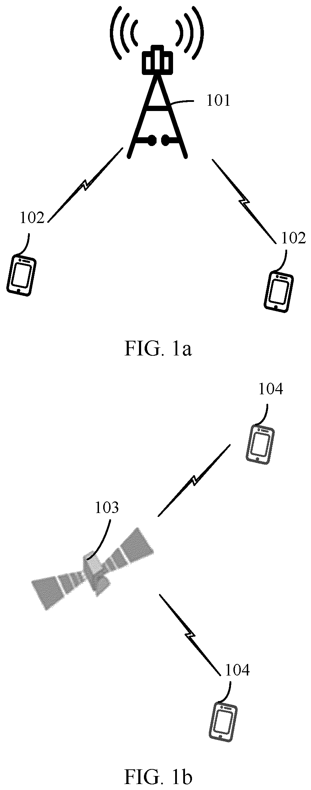

The following describes in detail system architectures in embodiments of this application with reference to the accompanying drawings. Communication methods in this application may be applied to a cellular communication system. FIG. 1a is a diagram of a communication system to which an embodiment of this application is applicable. The system includes a network device 101 and a terminal 102.

The network device 101 may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in a Wi-Fi system, or the like; or may be a module or a unit that completes some functions of a base station, for example, may be a central unit (central unit, CU) or a distributed unit (distributed unit, DU). The network device 101 may be a macro base station, may be a micro base station or an indoor base station, or may be a relay node, a donor node, or the like. A specific technology and a specific device form that are used for the network device 101 are not limited in embodiments of this application. For ease of description, the following provides descriptions by using an example in which the base station is used as the network device.

The terminal 102 may also be referred to as a terminal device, user equipment (user equipment, UE), a mobile station, a mobile terminal, or the like. The terminal may be widely used in various scenarios, for example, device-to-device (device-to-device, D2D), vehicle-to-everything (vehicle-to-everything, V2X) communication, machine-type communication (machine-type communication, MTC), an internet of things (internet of things, IoT), virtual reality, augmented reality, industrial control, self-driving, telemedicine, a smart grid, smart furniture, a smart office, smart wearable, smart transportation, and a smart city. The terminal may be a mobile phone, a tablet computer, a computer having a wireless transceiver function, a wearable device, a vehicle, an uncrewed aerial vehicle, a helicopter, an airplane, a ship, a robot, a mechanical arm, a smart home device, or the like. A specific technology and a specific device form used by the terminal are not limited in embodiments of this application.

The base station and the terminal may be fixed or movable. The base station and the terminal may be deployed on the land, including an indoor or outdoor device, a handheld device, or a vehicle-mounted device; may be deployed on a water surface; or may be deployed on an airplane, a balloon, and an artificial satellite in the air. Application scenarios of the base station and the terminal are not limited in embodiments of this application.

Communication between the base station and the terminal, between the base stations, and between the terminals may be performed by using a licensed spectrum, may be performed by using an unlicensed spectrum, or may be performed by using both the licensed spectrum and the unlicensed spectrum; or communication may be performed by using a spectrum below 6 gigahertz (gigahertz, GHz), may be performed by using a spectrum above 6 GHz, or may be performed by using both the spectrum below 6 GHz and the spectrum above 6 GHz. A spectrum resource used for wireless communication is not limited in embodiments of this application.

In embodiments of this application, functions of the base station may be performed by a module (for example, a chip) in the base station, or may be performed by a control subsystem including the functions of the base station. The control subsystem including the functions of the base station herein may be a control center in the foregoing application scenarios, such as the smart grid, the industrial control, the smart transportation, and the smart city. Functions of the terminal may be performed by a module (for example, a chip or a modem) in the terminal, or may be performed by an apparatus including the functions of the terminal.

For example, this solution may be applied to a wireless communication system like a 5G communication system or a satellite communication system. The wireless communication system usually includes cells, each cell includes a base station (Base Station, BS), and the base station provides a communication service for a plurality of mobile stations (Mobile Stations, MSs). The base station includes a baseband unit (Baseband Unit, BBU) and a remote radio unit (Remote Radio Unit, RRU). The BBU and the RRU may be deployed at different places. For example, the RRU is remotely deployed in a high-traffic area, and the BBU is deployed in a central equipment room. Alternatively, the BBU and the RRU may be placed in a same equipment room. Alternatively, the BBU and the RRU may be different components in a rack.

The wireless communication system includes but is not limited to a narrowband internet of things (Narrowband Internet of Things, NB-IoT) system, a global system for mobile communications (Global System for Mobile Communications, GSM), an enhanced data rate for GSM evolution (Enhanced Data rate for GSM Evolution, EDGE) system, a wideband code division multiple access (Wideband Code Division Multiple Access, WCDMA) system, a code division multiple access 2000 (Code Division Multiple Access, CDMA 2000) system, a time division-synchronous code division multiple access (Time Division- Synchronous Code Division Multiple Access, TD-SCDMA) system, a long term evolution (Long Term Evolution, LTE) system, and three application scenarios of the next generation 5G mobile communication system: enhanced mobile broadband (Enhanced Mobile Broadband, eMBB), ultra-reliable and low-latency communication (Ultra-reliable and Low-Latency Communication, URLLC), and an LTE enhanced Machine Type Communication (LTE enhanced Machine Type Communication, eMTC).

FIG. 1b is a diagram of another communication system to which an embodiment of this application is applicable. The system includes a satellite base station 103 and a terminal 104.

The satellite base station 103 may be an uncrewed aerial vehicle, a hot air balloon, a low-orbit satellite, a medium-orbit satellite, a high-orbit satellite, or the like. Alternatively, the satellite base station 103 may be a non-ground base station, a non-ground device, or the like. The satellite base station 103 may be used as a network device, or may be used as a terminal device. The satellite base station 103 may not have functions of a base station, or may have some or all functions of the base station. This is not limited in this application.

For descriptions of the terminal 104, refer to records of the terminal 102 in FIG. 1a. Details are not described herein again.

The satellite base station 103 may provide a communication service for the terminal 104. The satellite base station 103 transmits downlink data to the terminal 104. The data is encoded through channel encoding. Data obtained through channel encoding is transmitted to the terminal 104 through constellation modulation. The terminal 104 transmits uplink data to the satellite base station 103. The uplink data may also be encoded through the channel encoding. Data obtained through encoding is transmitted to the satellite base station 103 through the constellation modulation.

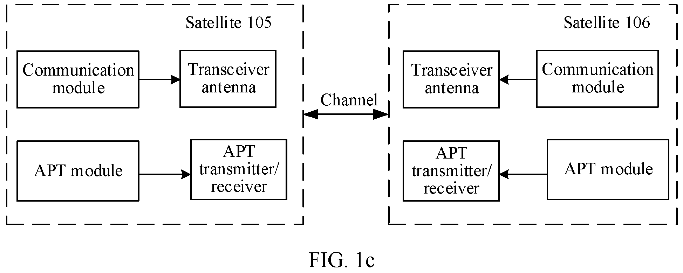

The communication methods in this application may be further applied to an inter-satellite communication system. FIG. 1c is a diagram of yet another communication system to which an embodiment of this application is applicable. The system includes a satellite 105 and a satellite 106.

A conventional inter-satellite link communication system may include two parts: a space beam acquisition, pointing and tracking (acquisition, pointing and tracking, APT) subsystem and a communication subsystem. The communication subsystem is responsible for inter-satellite information transmission and is a main part of the inter-satellite communication system. The APT subsystem is responsible for acquisition, pointing, and tracking between satellites. Acquiring refers to determining an incoming direction of an incident signal; pointing refers to adjusting a transmit wave to point at a receiving direction; and tracking refers to continuously adjusting pointing and acquisition in an entire communication process. To minimize impact of attenuation and interference in a channel and require high confidentiality and a high transmission rate, the APT subsystem needs to be adjusted in real time to constantly adapt to changes. All existing APT systems are optical systems. A disadvantage is that optical pointing is difficult, and a direction needs to be adjusted mechanically. Most of existing communication subsystems are optical communication systems, and there are some microwave band systems in which a single high-gain antenna is usually used. The existing APT system and communication subsystem are independent systems. A disadvantage is that optical communication is easily affected by vibration and the like, and a rate is unstable. A millimeter wave frequency is low, a communication capacity is low, and an antenna direction needs to be adjusted mechanically.

As shown in FIG. 1c, both the satellite 105 and the satellite 106 include a communication module, a transceiver antenna, an APT module, and APT transmitter/receiver. The communication methods in this application may be applied to the communication module.

In conclusion, the communication methods in this solution may be applied to the network device 101, the satellite base station 103, or the satellite 105, or may be applied to the terminal 102, the terminal 104, the satellite 106, or the like. This is not limited in this solution.

For example, when the communication methods are applied to the satellite base station 103, a plurality of branch adaptation layers are used to correspond to terminal networks under different channel distribution, thereby improving performance.

It should be understood that a quantity of devices shown in the foregoing figures is an example, and there may be a design with any quantity based on a requirement of an actual scenario. This is not limited in this solution.

The foregoing describes the architectures in embodiments of this application. The following describes methods in embodiments of this application in detail.

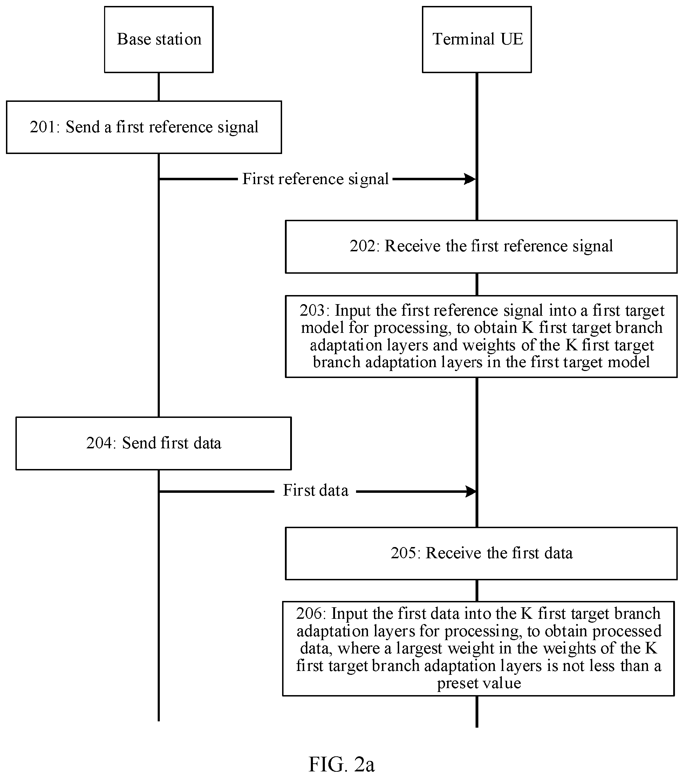

FIG. 2a is a schematic flowchart of a communication method according to an embodiment of this application. Optionally, the method may be applied to the foregoing communication system, for example, the communication system shown in FIG. 1a. The communication method shown in FIG. 2a may include steps 201 to 206. It should be understood that, for ease of description in this application, a sequence of 201 to 206 is used for description, and this is not intended to limit execution necessarily performed in the sequence. An execution sequence, execution time, a quantity of execution times, and the like of the foregoing one or more steps are not limited in embodiments of this application. The following provides descriptions by using an example in which an execution body of steps 201 and 204 in the communication method is a base station, and an execution body of steps 202, 203, 205, and 206 is a terminal. This application is also applicable to another execution body. Steps 201 to 206 are specifically as follows:

201: The base station sends a first reference signal.

The first reference signal may be a pilot signal. The pilot signal is a direct sequence spread spectrum signal that is continuously transmitted by the base station and that is not modulated. The pilot signal enables the terminal to obtain a forward code division multiple access channel time limit, provide a related demodulation phase reference, and the like.

202: The terminal receives the first reference signal.

The terminal receives the first reference signal from the base station.

203: The terminal inputs the first reference signal into a first target model for processing, to obtain K first target branch adaptation layers and weights of the K first target branch adaptation layers in the first target model, where the first target model includes N first target branch adaptation layers, K is not greater than N, and both K and N are positive integers.

It may be understood that the first target branch adaptation layers in this embodiment of this application correspond to different types of channel distribution respectively. That is, the N first target branch adaptation layers correspond to N types of channel distribution.

Certainly, it may be further understood that the N first target branch adaptation layers correspond to N' types of clustered channel distribution, where N is greater than N'. That is, at least one first target branch adaptation layer may correspond to one type of clustered channel distribution. This is not strictly limited in this solution. Clustering may be understood as combining similar channel distribution or same channel distribution into one type of channel distribution.

In other words, the first reference signal is input into the first target model for processing, so that the K first target branch adaptation layers and the weights of the K first target branch adaptation layers in the N first target branch adaptation layers of the first target model may be determined. That is, current channel distribution may be comprehensively represented by using types of channel distribution corresponding to the determined K first target branch adaptation layers and the weights corresponding to the K first target branch adaptation layers.

In a possible implementation, the first target model further includes a first target channel feature extraction network and a target sparse gating module.

The first target channel feature extraction network is used to process the first reference signal, to obtain channel distribution information and channel classification information corresponding to the channel distribution information.

The channel distribution information may be an eigenvector used to represent the current channel distribution in eigenvector space.

The channel classification information corresponding to the channel distribution information may be a probability of predicting the channel type to which the current channel distribution belongs.

The target sparse gating module is configured to obtain the K first target branch adaptation layers and the weights of the K first target branch adaptation layers through calculation based on the channel distribution information and the channel classification information.

The target sparse gating module may obtain, based on the channel distribution information and the channel classification information, the type corresponding to the current channel distribution. The current channel distribution is comprehensively represented by using the K first target branch adaptation layers and the weights corresponding to the K first target branch adaptation layers.

Optionally, the target sparse gating module may obtain a weight of each first target branch adaptation layer through calculation in the following manner:

$$\alpha = softmax(TopK(W_{SG} * h + p_{cluster})).$$

softmax is a normalized exponential function; $W_{SG}$ is a parameter of the target sparse gating module; $h$ is the channel distribution information; $p_{cluster}$ is the channel classification information corresponding to the channel distribution information; $\alpha$ is the weight of the branch adaptation layer; and *TopK* represents a quantity of finally selected branches. For example, if K=3, it indicates that only three of $\alpha_1$, $\alpha_2$, ... , and $\alpha_N$ have corresponding values, and others are 0. In this way, derivation time of a network does not increase as a quantity of branches increases.

Certainly, the weight of each first target branch adaptation layer may alternatively be obtained through calculation in another manner. This is not limited in this solution.

In a possible implementation, the K first target branch adaptation layers are used to separately process first data, to obtain data separately processed by the K first target branch adaptation layers.

For example, processing performed by each first target branch adaptation layer is performing affine transformation on the first data. For example, the first data is $f(x) \in C^{72 \times 14 \times 1 \times 1}$, and a dimension represents a complex number domain of 72 subcarriers, 14 symbols, one receive-end antenna, and one transmit-end antenna. Each first target branch adaptation layer corresponds to a group of parameters $(W_i, b_i)$, where $W \in C^{72 \times 14 \times 1 \times 1}$, and $b \in C^{72 \times 14 \times 1 \times 1}$. An affine transformation operation corresponding to each branch adaptation layer may be represented as: $t_i(f(x)) = W_i \cdot f(x) + b_i$. $i$ represents an identifier of the K first target branch adaptation layers, and $i$ is a positive integer.

Certainly, the processing performed by each first target branch adaptation layer may alternatively be another processing. This is not strictly limited in this solution.

The weights of the K first target branch adaptation layers are used to perform weighted summation processing on the data separately processed by the K first target branch adaptation layers, to obtain processed data.

For example, the weighted summation processing may be represented as: $T = \sum_{i=1}^{K} \alpha_i * t_i(f(x))$. $\alpha_i$ represents the weights of the K first target branch adaptation layers.

204: The base station sends the first data.

205: The terminal receives the first data.

The terminal receives the first data from the base station.

206: The terminal inputs the first data into the K first target branch adaptation layers for processing, to obtain the processed data, where a largest weight in the weights of the K first target branch adaptation layers is not less than a preset value.

For example, the weights of the K first target branch adaptation layers are sorted to find a largest weight value. When the largest weight value is not less than the preset value, it indicates that reliability of the obtained K first target branch adaptation layers is high. Therefore, the received first data is input into the K first target branch adaptation layers for processing.

The preset value may be any positive number not greater than 1. Certainly, the preset value may alternatively be 0. This is not limited in this solution. Optionally, the preset value is 0.8.

Optionally, the processing may be performing affine transformation on the input first data. For example, the base station side corresponds to the first data $f(x) \in C^{72 \times 14 \times 1 \times 1}$ output by using an orthogonal frequency division multiplexing (Orthogonal Frequency Division Multiplexing, OFDM) waveform, and the affine transformation operation corresponding to each branch adaptation layer may be represented as: $t_i(f(x)) = W_i \cdot f(x) + b_i$.

Based on the foregoing processing performed by each first target branch adaptation layer and the weight corresponding to each first target branch adaptation layer, $T = \sum_{i=1}^{K} \alpha_i * t_i(f(x))$ may be obtained through calculation by performing weighted summation processing. For descriptions of this part, refer to descriptions of step 203. Details are not described herein again.

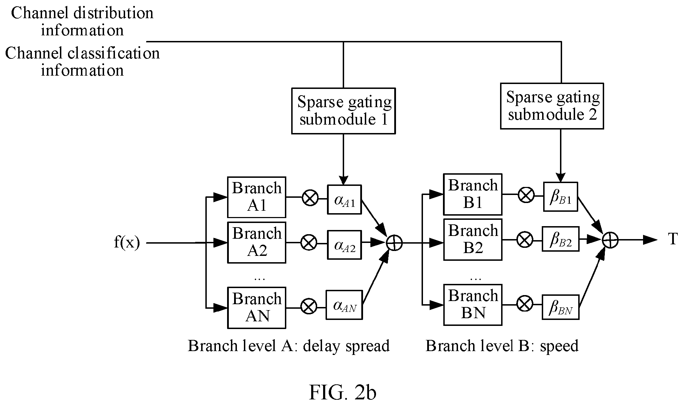

In a possible implementation, the target sparse gating module may further include a plurality of sparse gating submodules. As shown in FIG. 2b, through delay spread and speed classification, a branch level A performs training for different delay spread statuses (for example, a branch A1: 30 ns; and a branch A2: 100 ns), and a branch level B performs training for different speed statuses (for example, a branch B1: 3 km/s; and a branch B2: 30 km/s). Final weighted summation processing may be expressed as:

$$T = \sum_{i=1}^{N} \beta_{Bi} * t_{Bi}\left(\sum_{i=1}^{N} \alpha_{Ai} * t_{Ai}(f(x))\right).$$

$t_{Bi}$ and $t_{Ai}$ each represent the affine transformation operation corresponding to each branch adaptation layer. A value range of $i$ is an integer from 1 to N, $\alpha_{Ai}$ is a weight of each branch adaptation layer of the branch level A, and $\beta_{Bi}$ is a weight of each branch adaptation layer of the branch level B.

In other words, the plurality of sparse gating submodules are combined to implement multi-level dynamic representation of channel distribution. In this way, a representation of nonlinear channel distribution is obtained by using a combination in a plurality of parameter spaces, thereby improving a generalization transfer capability.

The processed data may be data obtained by decoding data T. For example, the foregoing decoded data may be obtained by inputting the data T into a target decoding network for decoding.

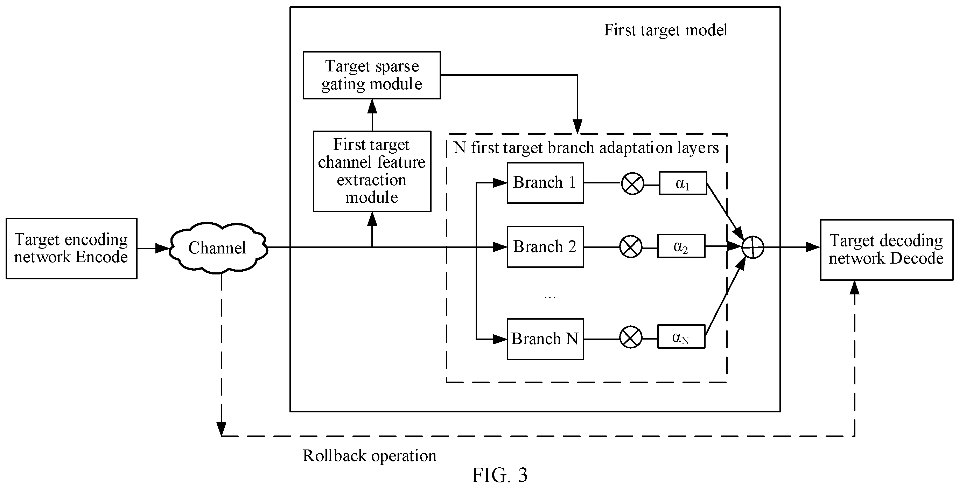

FIG. 3 is a diagram of a communication system according to an embodiment of this application. A first target model includes a first target channel feature extraction network, a target sparse gating module, and N first target branch adaptation layers. A terminal inputs a received first reference signal into the first target channel feature extraction network for processing, to obtain channel distribution information and channel classification information. Then, the channel distribution information and the channel classification information are input into the target sparse gating module for processing, to obtain K first target branch adaptation layers and weights of the K first target branch adaptation layers in N first target branch adaptation layers. When a largest weight in the weights of the K first target branch adaptation layers is not less than a preset value, the terminal inputs received first data into the K first target branch adaptation layers for processing, performs weighted sum calculation, and then inputs obtained data T into a target decoding network for decoding, to obtain the foregoing processed data.

In a possible implementation, when the largest weight in the weights of the K first target branch adaptation layers is less than the preset value, the terminal directly decodes the first data, to obtain processed data.

When a largest weight value is less than the preset value, it indicates that reliability of the determined K first target branch adaptation layers is low. Therefore, in a rollback operation shown in FIG. 3, the terminal directly decodes the received first data without processing the first data by using the K first target branch adaptation layers.

Optionally, current channel data may be further stored, and the current channel data is used as training data to retrain the first target model, to obtain a model with better performance. For descriptions of the training of the first target model, refer to records of a subsequent model training part. Details are not described herein again.

It should be noted that this embodiment is described by using an example in which the base station is used as a transmit end and the terminal is used as a receive end. Alternatively, the terminal may be used as a transmit end, and the base station may be used as a receive end. A processing process is the same as that described above, and details are not described herein again.

In this embodiment of this application, the terminal determines the K first target branch adaptation layers and the weights of the K first target branch adaptation layers in the N first target branch adaptation layers of the first target model based on the received reference signal. When the largest weight in the weights of the K first target branch adaptation layers is not less than the preset value, the received first data is input into the K first target branch adaptation layers for processing, to obtain the processed data. According to this method, actual channel distribution is represented based on the determined K first target branch adaptation layers and K weights, to cope with a dynamic channel change. This can improve system performance.

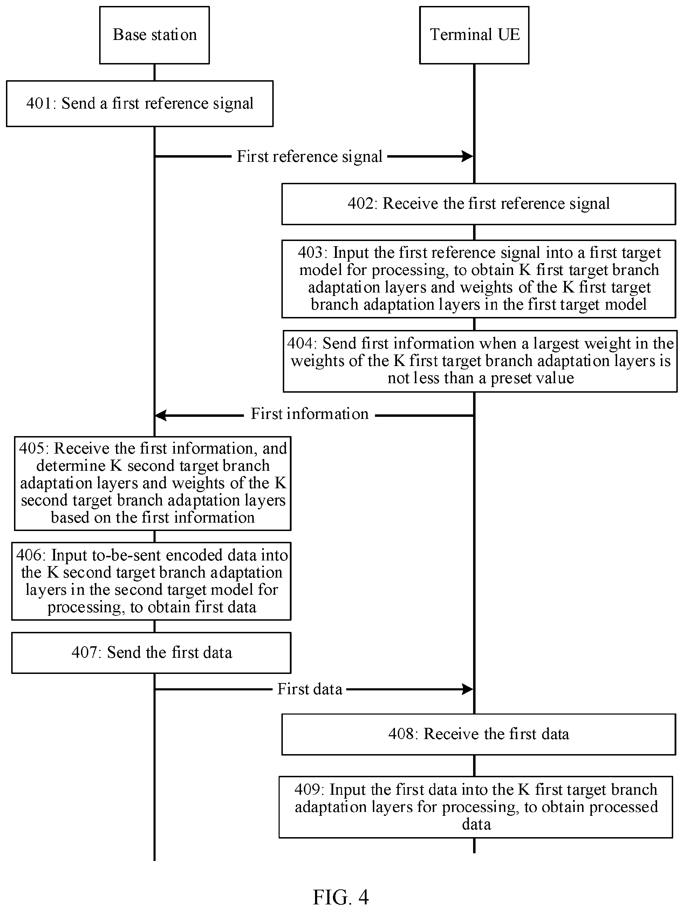

FIG. 4 is a schematic flowchart of another communication method according to an embodiment of this application. Optionally, the method may be applied to the foregoing communication system, for example, the communication system shown in FIG. 1a. The communication method shown in FIG. 4 may include steps 401 to 409. It should be understood that, for ease of description in this application, a sequence of 401 to 409 is used for description, and this is not intended to limit execution necessarily performed in the sequence. An execution sequence, execution time, a quantity of execution times, and the like of the foregoing one or more steps are not limited in embodiments of this application. The following provides descriptions by using an example in which an execution body of steps 401, 405, 406, and 407 in the communication method is a base station, and an execution body of steps 402 to 404, 408, and 409 is a terminal. This application is also applicable to another execution body. Steps 401 to 409 are specifically as follows:

401: The base station sends a first reference signal.

For descriptions of this step, refer to records of step 201 in the embodiment shown in FIG. 2a. Details are not described herein again.

402: The terminal receives the first reference signal.

For descriptions of this step, refer to records of step 202 in the embodiment shown in FIG. 2a. Details are not described herein again.

403: The terminal inputs the first reference signal into a first target model for processing, to obtain K first target branch adaptation layers and weights of the K first target branch adaptation layers in the first target model, where the first target model includes N first target branch adaptation layers, K is not greater than N, and both K and N are positive integers.

For descriptions of this step, refer to records of step 203 in the embodiment shown in FIG. 2a. Details are not described herein again.

404: The terminal sends first information when a largest weight in the weights of the K first target branch adaptation layers is not less than a preset value, where the first information indicates the K first target branch adaptation layers and the weights of the K first target branch adaptation layers, and the K first target branch adaptation layers and the weights of the K first target branch adaptation layers are used by the base station to process to-be-sent encoded data to obtain first data.

In other words, when the largest weight in the weights of the K first target branch adaptation layers is not less than the preset value, the terminal sends the information to the base station, so that the base station side processes the to-be-sent encoded data and then sends the first data. In this way, the base station side selects, based on the indication of the information, an optimal processing manner under corresponding channel distribution to process encoded data, so that communication performance can be improved.

It should be noted that this embodiment of this application is described only by using an example in which the terminal sends the first information when the largest weight in the weights of the K first target branch adaptation layers is not less than the preset value. Alternatively, the terminal may send the first information under any condition. For example, if the preset value is 0, the terminal sends the first information. This is not strictly limited in this solution.

405: The base station receives the first information, and determines, based on the first information, K second target branch adaptation layers corresponding to the K first target branch adaptation layers and weights of the K second target branch adaptation layers.

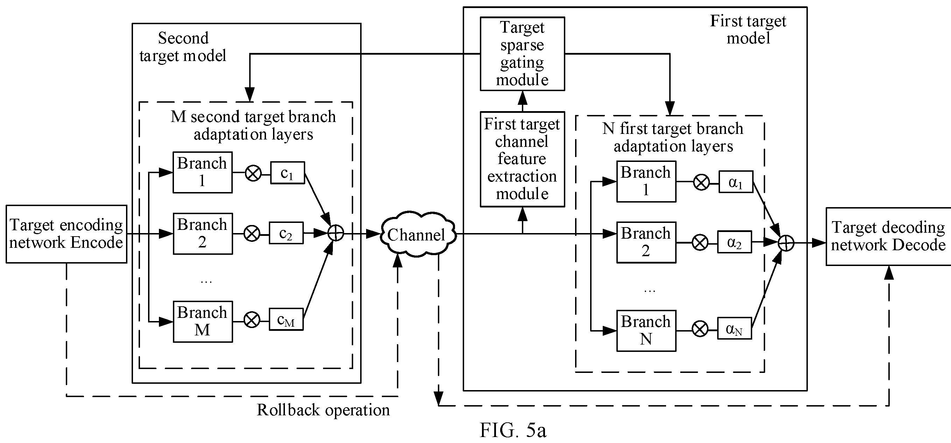

Optionally, a second target model is deployed on the base station side. FIG. 5a is a diagram of another communication system according to an embodiment of this application. The second target model includes M second target branch adaptation layers. The first target model includes the foregoing first target channel feature extraction network, target sparse gating module, and N first target branch adaptation layers.

The second target model includes the K second target branch adaptation layers. The K second target branch adaptation layers correspond to the foregoing K first target branch adaptation layers.

In other words, current channel distribution is represented on the terminal side based on the foregoing K first target branch adaptation layers. The terminal side feeds back a result to the base station side, so that the base station side determines the K second target branch adaptation layers that represent the current channel distribution, to process the to-be-sent encoded data.

The following describes a manner in which the base station side determines the K second target branch adaptation layers corresponding to the K first target branch adaptation layers.

Example 1: The terminal sends a first channel dictionary set to the base station.

The base station receives the first channel dictionary set, and performs dictionary alignment between the first channel dictionary set and a second channel dictionary set, to obtain a correspondence between a second target branch adaptation layer in the second channel dictionary set and a first target branch adaptation layer in the first channel dictionary set.

In this way, the base station may determine, based on the correspondence, the K second target branch adaptation layers corresponding to the K first target branch adaptation layers. Then, weights of the K second target branch adaptation layers may be determined based on the weights of the K first target branch adaptation layers.

Example 2: The base station sends a second channel dictionary set to the terminal.

The terminal receives the second channel dictionary set, and performs dictionary alignment between a first channel dictionary set and the second channel dictionary set, to obtain a correspondence between a second target branch adaptation layer in the second channel dictionary set and a first target branch adaptation layer in the first channel dictionary set.

Then, the terminal sends first indication information to the base station. The first indication information indicates the correspondence between the second target branch adaptation layer in the second channel dictionary set and the first target branch adaptation layer in the first channel dictionary set.

The base station may determine, based on the received first indication information, the K second target branch adaptation layers corresponding to the K first target branch adaptation layers, and the weights of the K second target branch adaptation layers.

Based on Example 1 and Example 2, optionally, the first channel dictionary set includes a correspondence between a first target branch adaptation layer and a channel label. The second channel dictionary set includes a correspondence between a second target branch adaptation layer and the channel label.

That is, the correspondence between the branch adaptation layers may be determined based on the same channel label.

Certainly, the K second target branch adaptation layers corresponding to the K first target branch adaptation layers may alternatively be determined in another manner. This is not strictly limited in this solution.

Optionally, the terminal may obtain the first channel dictionary set based on the first target channel feature extraction network in the first target model. The second target model further includes a second target channel feature extraction network. Correspondingly, the base station may obtain the second channel dictionary set based on the second target channel feature extraction network in the second target model.

An operation of the foregoing dictionary alignment is performed because training of channel feature extraction networks is related only to channel training sets, and a transmit end and a receive end may separately train the module independently. The channel training sets on the two sides may not be completely the same, and the obtained channel dictionary sets may be different. Therefore, branch adaptation layers of the ends are matched in a manner of the dictionary alignment.

For example, labeled historical channel information or sampling data $\{H, Y_{label}\}$ of a tapped delay line (Tapped Delay Line, TDL) or clustered delay line (Clustered Delay Line, CDL) channel model in the 3rd generation partnership project (3rd Generation Partnership Project, 3GPP) protocol is used as the channel dataset for network training. H represents a sample of the channel model, and $Y_{label}$ represents a label of the channel model. The channel data $H$ is input to output a classification result: a probability $\hat{y}$ that the channel data belongs to different channel label. A cross entropy is calculated based on $\hat{y}$ and $Y_{label}$ and is used as a loss function $L_{classify}$ for the training, to update the network. The loss function $L_{classify}$ may be represented as:

$$L_{classify} = -\sum_{i=1}^{N} Y_{label,i} \log \hat{y}_i.$$

N is a total quantity of types of different labels of channels participating in the training.

The two ends respectively train the channel feature extraction networks based on the loss function, to obtain different channel dictionary sets. For example, for the terminal, $D_{UE} = \{(1: TDL - A30v3, TDL - C30v3), (2: TDL - A300v100)\}$. For the base station, $D_{BS} = \{(a: CDL - A30v100), (b: TDL - A30v3, TDL - C30v3), (c: TDL - A300v100, TDL - C300v100)\}$. TDL - A30v3, TDL - C30v3, CDL - A30v100, and the like are all channel labels. (1: *TDL - A30v3, TDL - C30v3*) indicates that an identifier of a channel classification (that is, a branch adaptation layer) corresponding to a channel whose channel label is *TDL - A30v3 or TDL - C30v3* is 1. (*a: CDL - A30v100*) indicates that an identifier of a channel classification (that is, a branch adaptation layer) corresponding to a channel whose channel label is *CDL - A30v100* is *a*. a, b, c, 1 and 2 respectively represent identifiers of different channel classifications. For example, *TDL* - A30v3 represents a TDL-A channel model with delay spread of 30 ns and a speed of 3 km/s.

For example, the terminal sends the channel dictionary set $D_{UE}$ of the terminal. If the channel label in the channel dictionary set does not belong to the TDL or CDL channel model in the protocol (for example, a model obtained by modeling customized historical channel information), the terminal needs to additionally send channel data $h_p$ closest to a clustering center, so that the base station redefines the channel distribution information.

The base station receives the channel dictionary set $D_{UE}$, and matches the channel dictionary set with the channel dictionary set $D_{BS}$ obtained by the base station, to obtain a channel matching set $D_m$. For example, in the foregoing example, channel matching set $D_m$ = {(b: 1), (c: 2)}. In other words, a channel adaptation layer 1 on the terminal side corresponds to a channel adaptation layer b on the base station side. A channel adaptation layer 2 on the terminal side corresponds to a channel adaptation layer c on the base station side.

For the additional channel data $h_p$, the base station may obtain channel distribution information by inputting the channel feature extraction network of the base station, to determine a channel label to which the additional channel data belongs. If some channel dictionary sets cannot be matched, it indicates that a plurality of branch adaptation layers of the two ends under the channel cannot be completely matched. In this case, model training needs to be performed again to obtain channel dictionary sets that can be matched.

The base station may further feed back the channel matching set $D_m$ to the terminal for use during derivation.

For the foregoing case in which the matching cannot be performed, for example, when M is less than K, the base station updates a third target model to obtain the second target model, where the second target model includes the K second target branch adaptation layers, and the third target model includes the M second target branch adaptation layers.

In other words, when only the M second target branch adaptation layers in the third target model are deployed on the base station side, the M second target branch adaptation layers cannot completely include the branch adaptation layers corresponding to the K first target branch adaptation layers. Therefore, the third target model is updated by retraining the third target model, to obtain the second target model. The second target model may meet a condition of including the K second target branch adaptation layers.

In this way, the base station may determine the K second target branch adaptation layers corresponding to the K first target branch adaptation layers.

In a possible implementation, the K second target branch adaptation layers are used to separately process the to-be-sent encoded data, to obtain data separately processed by the K second target branch adaptation layers.

For example, processing performed by each second target branch adaptation layer is performing affine transformation on the to-be-sent encoded data. For example, the to-be-sent encoded data is $f(x) \in C^{72 \times 14 \times 1 \times 1}$, and a dimension represents a complex number domain of 72 subcarriers, 14 symbols, one receive-end antenna, and one transmit-end antenna. Each second target branch adaptation layer corresponds to a group of parameters $(W_j, b_j)$, where $W \in C^{72 \times 14 \times 1 \times 1}$, and $b \in C^{72 \times 14 \times 1 \times 1}$. An affine transformation operation corresponding to each branch adaptation layer may be represented as: $t_j(f(x)) = W \cdot f(x) + b_j$. $j$ represents an identifier of the K second target branch adaptation layers, and $j$ is a positive integer.

Certainly, the processing performed by each second target branch adaptation layer may alternatively be another processing. This is not strictly limited in this solution.

The weights of the K second target branch adaptation layers are used to perform weighted summation processing on the data separately processed by the K second target branch adaptation layers, to obtain the first data.

For example, the weighted summation processing may be represented as:

$$ T' = \sum_{j=1}^{K} \alpha_j * t_j(f(x)) $$

. $\alpha_j$ represents the weights of the K second target branch adaptation layers.

406: The base station inputs the to-be-sent encoded data into the K second target branch adaptation layers in the second target model for processing, to obtain the first data.

For descriptions of this step, refer to records of step 405. Details are not described herein again.

407: The base station sends the first data.

The base station sends, to the terminal, the data processed by the K second target branch adaptation layers.

408: The terminal receives the first data.

409: The terminal inputs the first data into the K first target branch adaptation layers for processing, to obtain processed data.

For descriptions of this step, refer to records of step 206 in the embodiment shown in FIG. 2a. Details are not described herein again.

In a possible implementation, the terminal sends second information when the largest weight in the weights of the K first target branch adaptation layers is less than the preset value, where the second information indicates the base station to directly send the first data.

In other words, the base station does not need to process the to-be-sent encoded data (the first data) by using the second target branch adaptation layers. Correspondingly, the terminal directly decodes the received first data, and does not need to perform processing by using the first target branch adaptation layers.

In a possible implementation, the base station further sends a second reference signal.

The terminal receives the second reference signal. Then, the terminal sends third information based on the second reference signal. The third information is the same as the first information. Alternatively, the third information indicates the base station to send a reference signal after an interval of first time.

In other words, the terminal determines, based on the second reference signal, that current channel distribution is consistent with the channel distribution corresponding to the foregoing first reference signal. That is, the channel distribution remains unchanged relatively within a period of time from corresponding to the first reference signal to the second reference signal. The terminal indicates the base station to send the reference signal after the period of time.

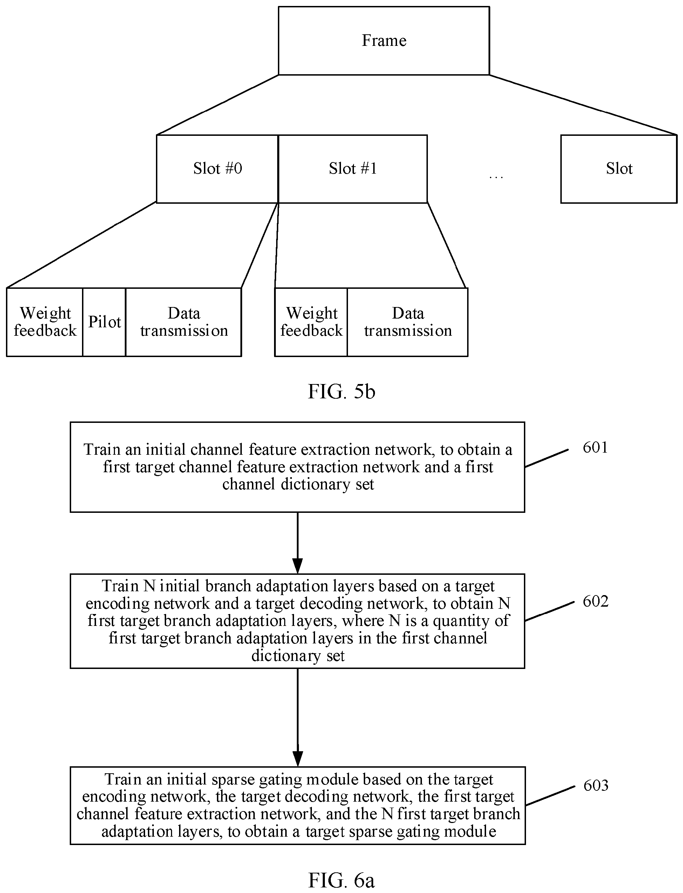

Optionally, if the channel distribution information in a current subframe remains unchanged, as shown in FIG. 5b, sending of a reference signal is reduced in a next slot (a slot #1). For example, there is no reference signal in the slot #1.

After receiving the third information, the base station sends data within the first time.

That the data is sent within the first time may be understood as that the base station no longer sends the reference signal within the first time.

Correspondingly, the terminal receives the data sent within the first time. That is, the terminal no longer receives the reference signal within the first time.

In this way, pilot transmission overheads can be reduced, and spectral efficiency of data transmission can be improved.

In another possible implementation, the base station sends a second reference signal. The terminal receives the second reference signal. Then, the terminal sends third information based on the second reference signal. The third information is different from the first information. In other words, current channel distribution changes. Therefore, the terminal needs to feed back each newly determined first target branch adaptation layer and a weight of the first target branch adaptation layer to the base station.

Optionally, when the channel distribution information changes, for example, a weight changes, as shown in FIG. 5b, sending is performed by using a frame structure of a slot #0.

When a rollback operation is triggered (a largest weight is less than the preset value), a data transmission frame structure in the original 3GPP standard is rolled back.

In a possible implementation, a feedback dimension of the information in this embodiment of this application is related to a quantity N of branches in the first target branch adaptation layers, the preset value Γ,

and a TopK value of the target sparse gating module.

For example:

(1) quantity of bits $N_{index} = \lceil \log_2 N \rceil$ of a branch identifier of the first target branch adaptation layer, where $\lceil \log_2 N \rceil$ represents rounding $\log_2 N$ up, and N is a total quantity of first target branch adaptation layers.

(2) Quantity $N_{quan} = \left\lceil \log_2 \frac{1-\Gamma}{\Delta} \right\rceil$ of quantization bits, where a quantization loss is set to $\Delta$. By default, a largest weight value is sent first.

(3) TopK of the target sparse gating module is set to K, indicating that K weights with largest weight values are selected. The weight value is calculated as follows:

A formula for calculating the largest weight is set to $1 - \frac{1-\Gamma}{2^{N_{quan}}} * B$, where $B \in [0, 2^{N_{quan}} - 1]$, and B is a conversion factor for converting the quantity of quantization bits into a decimal number; and

a formula for calculating other weights is $\frac{1-\Gamma}{2^{N_{quan}}} * B$.

Because a sum of the weights is 1, a weight of a last branch obtained through calculation based on weights of first K-1 branches is $\frac{1-\Gamma}{2^{N_{quan}}} * (B_1 - \sum_{i=2}^{K-1} B_i)$. $B_1$ is a decimal representation of the largest weight value. $B_i$ is a decimal representation of an $i^{th}$ weight value.

When the largest weight is less than the preset value, it is set that 1 bit indicates the rollback operation.

Based on the foregoing setting, a quantity of bits that need to be fed back in a feedback table may be calculated as: $K * N_{index} + (K - 1) * N_{quan}$. In this way, feedback information overheads can be reduced.

The foregoing parameters may be given and configured in a channel dictionary set, so that synchronization between the receive end and the transmit end can be implemented.

For example, if $N = 6$, $\Gamma = 0.8$, $\Delta = 0.02$, and TopK=3, the following control channel feedback table may be designed, and a total of 3*3+3*2=15 bits are needed for representation. Each branch is represented in binary. Because the weight of the branch 4 may be obtained through calculation based on the branch 1 and the branch 2, no feedback may be performed.

Table 1

| Branch identifier (3 bits) | Weight (3 bits) |
|---|---|
| Branch 1 (001) | 0.9 (100) |
| Branch 2 (010) | 0.05 (010) |

(continued)

| Branch identifier (3 bits) | Weight (3 bits) |
|---|---|
| Branch 4 (100) | 0.05 (/) |

Under a time division duplexing (Time Division Duplexing, TDD) condition, because the weight is related to the channel distribution information, the transmit end may obtain channel estimation information by using channel reciprocity, and similarly may directly estimate the branch weight by using the channel feature extraction network and the sparse gating module. The transmit end may perform feedback to the receive end for synchronization by using the foregoing design, to ensure that the branches at the transmit end and the receive end are consistent.

A system that uses the communication method in this solution is simulated, to obtain the following result: Performance of the target encoding network and the target decoding network in hybrid channel training under a high signal-to-noise ratio in a specific channel can be improved by adding the plurality of branch adaptation layers. In addition, for an unknown channel, performance can be improved by combining clustered channels by using the target sparse gating module.

In addition, this solution focuses on an expression of a channel distribution classification instead of an expression of single-frame channel feedback. It is found through experiments that this solution is robust to a change of a feedback delay due to adaptive channel adjustment, and is robust to an output dimension of the channel distribution information.

It should be noted that this embodiment is described by using an example in which the base station is used as the transmit end and the terminal is used as the receive end. Alternatively, the terminal may be used as the transmit end, and the base station may be used as the receive end. A processing process is the same as that described above, and details are not described herein again.

This embodiment is described by using an example in which the reference signal receive end sends the first information, and the first information indicates the K first target branch adaptation layers and the weights of the K first target branch adaptation layers.

It should be noted that the reference signal receive end may alternatively send the fourth information. The fourth information indicates the K second target branch adaptation layers and the weights of the K second target branch adaptation layers. The K second target branch adaptation layers and the weights of the K second target branch adaptation layers are used by the transmit end to process the to-be-sent encoded data.

In this way, the transmit end may directly process the to-be-sent encoded data based on the information.

The K second target branch adaptation layers and the weights of the K second target branch adaptation layers are determined based on the K first target branch adaptation layers and the weights of the K first target branch adaptation layers.

Optionally, the reference signal receive end sends a first channel dictionary set, where the first channel dictionary set is used by the transmit end to determine a correspondence between the N first target branch adaptation layers and M second target branch adaptation layers of the transmit end, and M is a positive integer.

Then, the transmit end receives the first channel dictionary set. In addition, dictionary alignment is performed between the first channel dictionary set and a second channel dictionary set, to obtain a correspondence between a second target branch adaptation layer in the second channel dictionary set and a first target branch adaptation layer in the first channel dictionary set.

The transmit end further sends first indication information, where the first indication information indicates the correspondence between the second target branch adaptation layer in the second channel dictionary set and the first target branch adaptation layer in the first channel dictionary set.

The reference signal receive end further determines, based on the received first indication information, the K second target branch adaptation layers corresponding to the K first target branch adaptation layers, and the weights of the K second target branch adaptation layers.

Alternatively, the transmit end sends a second channel dictionary set.

The reference signal receive end receives the second channel dictionary set. Then, dictionary alignment is performed between a first channel dictionary set and the second channel dictionary set, to obtain a correspondence between a second target branch adaptation layer in the second channel dictionary set and a first target branch adaptation layer in the first channel dictionary set.

Then, the reference signal receive end determines the K second target branch adaptation layers corresponding to the K first target branch adaptation layers, and the weights of the K second target branch adaptation layers.

Correspondingly, in a possible implementation, the base station further sends a second reference signal.

The terminal receives the second reference signal. Then, the terminal sends fifth information based on the second reference signal. The fifth information is the same as the fourth information. Alternatively, the fifth information indicates the base station to send a reference signal after an interval of first time.

In other words, the terminal determines, based on the second reference signal, that current channel distribution is consistent with the channel distribution corresponding to the foregoing first reference signal. That is, the channel distribution remains unchanged relatively within the period of time from corresponding to the first reference signal to the second reference signal. The terminal indicates the base station to send the reference signal after the period of time.

In this embodiment of this application, the terminal determines the K first target branch adaptation layers and the weights of the K first target branch adaptation layers in the N first target branch adaptation layers of the first target model based on the received reference signal. When the largest weight in the weights of the K first target branch adaptation layers is not less than a preset value, the terminal sends the information to the base station, so that the base station inputs, based on the information, the to-be-sent encoded data into the K second target branch adaptation layers for processing, and sends processed first data. Then, the terminal inputs the received first data into the K first target branch adaptation layers for processing, to obtain the processed data. According to this method, actual channel distribution is represented at the terminal based on the determined K first target branch adaptation layers and K weights, to cope with a dynamic channel change. This can improve system performance. In addition, the terminal feeds back, to the base station, the K first target branch adaptation layers and the K weights that correspond to the actual channel distribution, so that the base station selects, based on an information indication, an optimal processing manner under the corresponding channel distribution to process the encoded data, thereby improving communication performance.

The foregoing describes the communication methods in embodiments of this application. The following describes a target model training method in embodiments of this application. FIG. 6a is a schematic flowchart of a target model training method according to an embodiment of this application. The target model training method shown in FIG. 6a may include steps 601 to 603. It should be understood that, for ease of description in this application, a sequence of 601 to 603 is used for description, and this is not intended to limit execution necessarily performed in the sequence. An execution sequence, execution time, a quantity of execution times, and the like of the foregoing one or more steps are not limited in embodiments of this application. Steps 601 to 603 are specifically as follows:

601: Train an initial channel feature extraction network, to obtain a first target channel feature extraction network and a first channel dictionary set.

In a possible implementation, step 601 may include:

training the initial channel feature extraction network for a plurality of times, to obtain the first target channel feature extraction network and the first channel dictionary set. The initial channel feature extraction network is obtained based on labeled historical channel information or by pretraining a preset channel model.

The preset model may be a TDL model or a CDL channel model in the 3GPP protocol. For example, a training set (the labeled historical channel information) is sampled, a channel feature extraction network is input, a probability that a sample belongs to each channel classification is output, a cross-entropy loss function of the probability and the label is then calculated, and a network parameter is further trained, so that the initial channel feature extraction network may be obtained.

When the channel feature extraction network $U_{t-1}$ is trained for the tth time, both the unlabeled channel information and the labeled historical channel information are input into the channel feature extraction network $U_{t-1}$ for processing, to obtain channel distribution information respectively corresponding to the unlabeled channel information and the labeled historical channel information.

$N_{t-1}$ clustering centers are obtained based on the channel distribution information.

For example, the clustering centers are obtained by performing clustering processing by using a K-means clustering algorithm (k-means clustering algorithm, K-means) or a subspace K-means method.

A predicted channel dictionary set is obtained based on the $N_{t-1}$ clustering centers and the channel distribution information.

For example, a Euclidean distance between any one of the clustering centers and any one piece of the channel distribution information is calculated based on the clustering centers and the channel distribution information, and a most possible channel type label of each piece of channel distribution information is inferred based on the Euclidean distance by using existing channel labels. The predicted channel dictionary set may be obtained by combining same channel type labels in the clustering centers.

A first loss value is obtained through calculation based on the predicted channel dictionary set and an annotated channel dictionary set, and a parameter of the channel feature extraction network $U_{t-1}$ is adjusted based on the first loss value; and

t=t+1 is made, the foregoing steps are repeatedly performed until a quantity of iterations reaches a preset quantity of times, the channel feature extraction network $U_{t-1}$ is used as the first target channel feature extraction network, and the predicted channel dictionary set is used as the first channel dictionary set.

Optionally, the channel feature extraction network may include an extractor network and a classifier network. An input of the extractor network is reference information, and certainly may alternatively be a channel estimation result $H_{est}$. $H_{est}$ may be least squares (Least Squares, LS) channel estimation or minimum mean square error (Minimum Mean Square Error, MMSE) channel estimation obtained based on reference information, or may be a channel estimation result obtained through a receive-end neural network. An output of the extractor network is channel distribution information $h$, and is used to represent an eigenvector of current channel distribution in the feature space. An input of the classifier network is the channel distribution information *h*, and an output is channel classification information $p_{cluster}$ corresponding to the channel distribution information. The channel classification information is represented based on the channel dictionary set.

The loss function $L1$ may be represented as:

$$L1 = \lambda L_{classify} + (1-\lambda)L_{cluster}.$$

$\lambda \in [0,1]$, where $\lambda$ is a hyperparameter, for adjusting an impact ratio of two loss functions $L_{classify}$ and $L_{cluster}$ ; $L_{classify}$ is a cross-entropy loss function; $L_{cluster}$ is a clustering loss function;

$$L_{cluster} = KL(P\|Q) = \sum_i \sum_j p_{ij} log \frac{p_{ij}}{q_{ij}} \quad,$$

where $KL(P\|Q)$ represents a (Kullback-Leibler, KL) divergence between auxiliary target distribution P and soft clustering distribution Q of a sample; $q_{ij}$ represents a probability that a sample i belongs to a $j^{th}$ cluster, and

$$q_{ij} = \frac{\left(1+\left\||h_i-\mu_j\right\||^2\right)^{-1}}{\sum_{j'}^N \left(1+\left\||h_i-\mu_{j'}\right\||^2\right)^{-1}} \; ;$$ $h_i$ is channel distribution information output by the sample i through the extractor network, $\mu_j$ is a centroid of the $j^{th}$ cluster, j' is 1,2 ... or N, and N is a quantity of clustering centers; $p_{ij}$ represents auxiliary target distribution; and

$$p_{ij} = \frac{q_{ij}^2/f_j}{\sum_{j'}^N q_{ij'}^2/f_{j'}}, f_j = \sum_i^M q_{ij} \;,$$ i is 1,2 ... or M, and M is a quantity of samples.

The trained first target channel feature extraction network may be obtained by performing training based on the foregoing loss function.

602: Train N initial branch adaptation layers based on a target encoding network and a target decoding network, to obtain N first target branch adaptation layers, where N is a quantity of first target branch adaptation layers in the first channel dictionary set.

In a possible implementation, step 602 may include:

when an $m^{th}$ initial branch adaptation layer is trained for the $t^{th}$ time, inputting first sample data into the target encoding network and the preset channel model for processing, to obtain second sample data; inputting the second sample data into the $m^{th}$ initial branch adaptation layer for processing, to obtain data processed by the $m^{th}$ initial branch adaptation layer, where m is a positive integer, and m is not greater than N; inputting the data processed by the $m^{th}$ initial branch adaptation layer into the target decoding network for processing, to obtain third sample data; obtaining a second loss value through calculation based on the first sample data and the third sample data, and adjusting parameters of the $m^{th}$ initial branch adaptation layer based on the second loss value; making t=t+1, repeatedly performing the foregoing steps until a stop condition is met, and using the $m^{th}$ initial branch adaptation layer as an $m^{th}$ first target branch adaptation layer; and making m=m+1, and repeatedly performing the foregoing steps until m=N, to obtain the N first target branch adaptation layers.

In a possible implementation, the method further includes:
sending second indication information, where the second indication information indicates the $m^{th}$ initial branch adaptation layer to be trained.

For example, a transmit end sends the indication information to a receive end, to indicate the receive end to train an $m^{th}$ branch. Then, the transmit end sends training data to the receive end.

Alternatively, the receive end sends the indication information to the transmit end, to notify the receive end that the transmit end needs to train an $m^{th}$ branch. In this way, the transmit end sends the training data to the receive end.

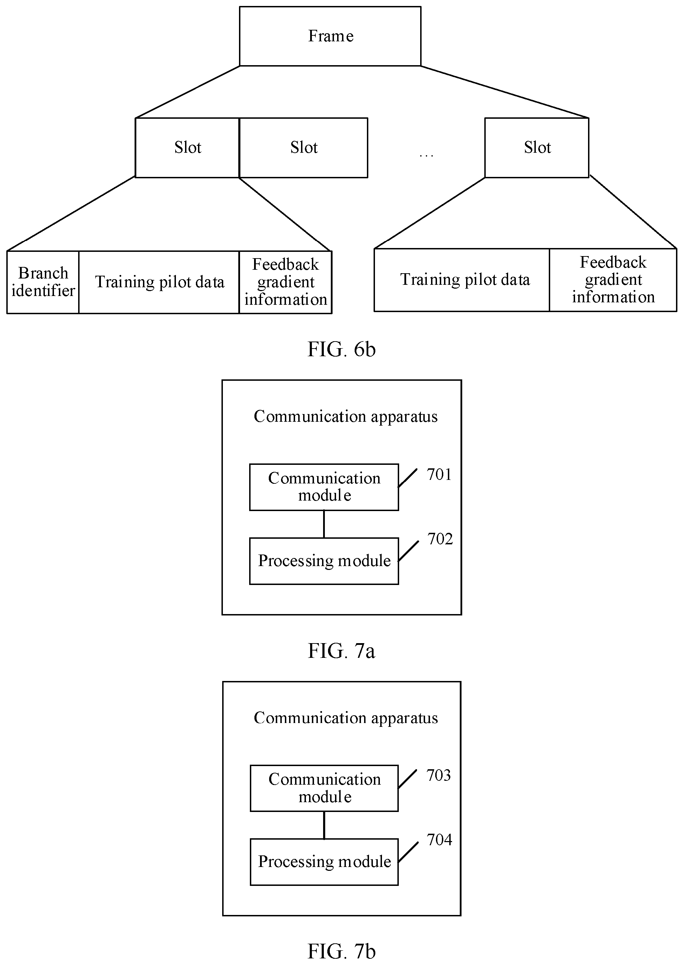

Optionally, as shown in FIG. 6b, for training of a plurality of branch adaptation layers, a large quantity of datasets are needed to represent a feature of channel distribution. A pilot (reference signal) is sent in all slots in one subframe, and gradient information for training is then received. For a branch corresponding to each channel type, a channel dictionary set identifier may be additionally indicated in a frame header. This is done to indicate an adaptation layer trained in the frame.

603: Train an initial sparse gating module based on the target encoding network, the target decoding network, the first target channel feature extraction network, and the N first target branch adaptation layers, to obtain a target sparse gating module.

In other words, the initial sparse gating module is trained based on the trained target encoding network, target decoding network, first target channel feature extraction network, and N first target branch adaptation layers.

Based on the foregoing training, the target model shown in FIG. 3 may be obtained. The target model includes the target encoding network, the target decoding network, and a first target model, and the first target model includes the first target channel feature extraction network, the N first target branch adaptation layers, and the target sparse gating module.

In a possible implementation, step 603 may include:
training the initial sparse gating module for a plurality of times, to obtain the target sparse gating module.

When a sparse gating module $X_{t-1}$ is trained for the $t^{th}$ time, fourth sample data is input into the target encoding network and the preset channel model for processing, to obtain fifth sample data;

the fifth sample data is input into the first target channel feature extraction network for processing, to obtain channel distribution information training data and channel classification information training data;

both the channel distribution information training data and the channel classification information training data are input into the sparse gating module $X_{t-1}$ for processing, to obtain R first target branch adaptation layer samples corresponding to the channel distribution information training data and weight samples of the R first target branch adaptation layers, where R is a positive integer, and R is not greater than N;

the fifth sample data is processed based on the R first target branch adaptation layer samples and the weight samples of the R first target branch adaptation layers, to obtain processed training data;

the processed training data is input into the target decoding network for processing, to obtain sixth sample data;

a third loss value is obtained through calculation based on the fourth sample data, the sixth sample data, and the weight samples of the R first target branch adaptation layers, and a parameter of the sparse gating module $X_{t-1}$ is adjusted based on the third loss value; and

t=t+1 is made, the foregoing steps are repeatedly performed until a stop condition is met, and the sparse gating module $X_{t-1}$ is used as the target sparse gating module.

Optionally, an entropy regular constraint is added to a training process, so that a decision of the channel distribution is clearer. The loss function L2 may be represented as:

$$L2 = L_{llr} + \beta Entropy(\alpha).$$

$L_{llr}$ is a loss function during joint training of the target encoding network and the target decoding network. $\alpha$ is a weight of the branch adaptation layer, $Entropy(\alpha)$ represents an entropy for calculating the weight of the branch adaptation layer, and $\beta$ is a hyperparameter not less than 0.

The trained target sparse gating module may be obtained by performing training based on the foregoing loss function.

In a possible implementation, the target model further includes a second target model, and the second target model includes a second target channel feature extraction network and M second target branch adaptation layers.

For a training process of the second target channel feature extraction network, refer to records of step 601. Details are not described herein again.

The M second target branch adaptation layers may be obtained by jointly training the M initial branch adaptation layers and the N initial branch adaptation layers for a plurality of times.

When an m'th initial branch adaptation layer is trained for the $t^{th}$ time, seventh sample data is input into the target encoding network for processing, to obtain eighth sample data.

The eighth sample data is input into the m'th initial branch adaptation layer for processing, to obtain data processed by the m'th initial branch adaptation layer, where m' is a positive integer, and m' is not greater than M.

The data processed by the m'th initial branch adaptation layer is input into the preset channel, the m'th initial branch adaptation layer, and the target decoding network for processing, to obtain ninth sample data. There is a correspondence between the m'th initial branch adaptation layer in the second target model and the m'th initial branch adaptation layer in the first target model. For example, the first channel dictionary set and a second channel dictionary set may be separately obtained through training based on the foregoing training of the channel feature extraction network. The first channel dictionary set corresponds to the first target model, and the second channel dictionary set corresponds to the second target model. In this way, during training, adaptation layer alignment may be performed on the two models, and the two models are then trained together.

A fourth loss value is obtained through calculation based on the seventh sample data and the ninth sample data, and parameters of the m'th initial branch adaptation layer and the m'th initial branch adaptation layer are adjusted based on the fourth loss value.

t=t+1 is made, the foregoing steps are repeatedly performed until a stop condition is met, the m'th initial branch adaptation layer is used as the m'th first target branch adaptation layer, and the m'th initial branch adaptation layer is used as an m'th second target branch adaptation layer.

m'=m'+1 is made, and the foregoing steps are repeatedly performed until m'=M, to obtain the N first target branch adaptation layers and the M second target branch adaptation layers.

Optionally, M=N. Certainly, M and N may alternatively be in another relationship. This is not limited in this solution.

In this embodiment of this application, the first target channel feature extraction network is obtained by training the initial channel feature extraction network. Then, the N initial branch adaptation layers are trained, to obtain the N first target branch adaptation layers. Finally, the initial sparse gating module is trained based on the trained target encoding network, target decoding network, first target channel feature extraction network, and N first target branch adaptation layers, to obtain the target sparse gating module. The target model obtained by using this method can resolve a problem of neural network training and derivation caused by a dynamic channel change in an environment.

According to another aspect, in this solution, an output of the branch adaptation layer is adjusted by training the weight of the branch adaptation layer, instead of training parameters of the target encoding network and the target decoding network. In this way, network training overheads can be reduced.

An example in which the target model in this embodiment of this application includes a plurality of network modules is used for description. It should be noted that the plurality of network modules may be independent network modules, or may be integrated, or some network modules are integrated. This is not strictly limited in this solution.

It should be noted that this embodiment of this application is described by using an example in which the first target model (including the first target channel feature extraction network, the N first target branch adaptation layers, and the target sparse gating module) is deployed at the receive end and the second target model (including the second target channel feature extraction network and the M second target branch adaptation layers) is deployed at the transmit end. Alternatively, the first target model may be deployed at the transmit end, the second target model may be deployed at the receive end, or the like. In this embodiment of this application, only the first target model or the like may alternatively be deployed. This is not strictly limited in this solution.

It should be noted that, in embodiments of this application, unless otherwise stated or there is a logic conflict, terms and/or descriptions between the embodiments are consistent and may be mutually referenced, and technical features in different embodiments may be combined into a new embodiment based on an internal logical relationship thereof.

The foregoing describes in detail the methods in embodiments of this application. The following provides apparatuses in embodiments of this application. It may be understood that, in apparatus embodiments of this application, division into a plurality of units or modules is merely logical division based on functions, and is not intended to limit specific structures of the apparatuses. During specific implementation, some functional modules may be subdivided into more functional modules that are smaller, and some functional modules may also be combined into one functional module. However, regardless of whether these functional modules are subdivided or combined, general procedures performed by the apparatuses are the same. For example, some apparatuses include a receiving unit and a sending unit. In some designs, the sending unit and the receiving unit may alternatively be integrated into a communication unit, and the communication unit may implement functions implemented by the receiving unit and the sending unit. Usually, each unit corresponds to respective program code (or program instructions). When the program code corresponding to the unit is run on a processor, the unit is controlled by a processing unit to perform a corresponding procedure to implement a corresponding function.

An embodiment of this application further provides an apparatus configured to implement any one of the foregoing methods. For example, a communication apparatus is provided, including modules (or means) configured to implement steps performed by the terminal in any one of the foregoing methods. For another example, another communication apparatus is further provided, and includes modules (or means) configured to implement steps performed by the base station in any one of the foregoing methods.

For example, FIG. 7a is a diagram of a structure of a communication apparatus according to an embodiment of this application. The communication apparatus is configured to implement the foregoing communication methods, for example, the communication methods shown in FIG. 2a and FIG. 4.

As shown in FIG. 7a, the apparatus may include a communication module 701 and a processing module 702. Details are as follows:

The communication module 701 is configured to receive a first reference signal.

The processing module 702 is configured to input the first reference signal into a first target model for processing, to obtain K first target branch adaptation layers and weights of the K first target branch adaptation layers in the first target model, where the first target model includes N first target branch adaptation layers, K is not greater than N, and both K and N are positive integers.

The communication module 701 is further configured to receive first data.

The processing module 702 is further configured to input the first data into the K first target branch adaptation layers for processing, to obtain processed data, where a largest weight in the weights of the K first target branch adaptation layers is not less than a preset value.

In a possible implementation, the first target model further includes a first target channel feature extraction network and a target sparse gating module, and the first target channel feature extraction network is configured to process the first reference signal, to obtain channel distribution information and channel classification information corresponding to the channel distribution information. The target sparse gating module is configured to obtain the K first target branch adaptation layers and the weights of the K first target branch adaptation layers through calculation based on the channel distribution information and the channel classification information.

In a possible implementation, the K first target branch adaptation layers are used to separately process the first data, to obtain data separately processed by the K first target branch adaptation layers; and the weights of the K first target branch adaptation layers are used to perform weighted summation processing on the data separately processed by the K first target branch adaptation layers, to obtain the processed data.

In a possible implementation, the processing module 702 is further configured to: when the largest weight in the weights of the K first target branch adaptation layers is less than the preset value, decode the first data, to obtain processed data.

In a possible implementation, the communication module 701 is further configured to send first information, where the first information indicates the K first target branch adaptation layers and the weights of the K first target branch adaptation layers, and the K first target branch adaptation layers and the weights of the K first target branch adaptation layers are used by a transmit end to process to-be-sent encoded data to obtain the first data.

In a possible implementation, the communication module 701 is further configured to send second information when the largest weight in the weights of the K first target branch adaptation layers is less than the preset value, where the second information indicates the transmit end to directly send the first data.

In a possible implementation, the communication module 701 is further configured to send a first channel dictionary set, where the first channel dictionary set is used by the transmit end to determine a correspondence between the N first target branch adaptation layers and M second target branch adaptation layers of the transmit end, and M is a positive integer.

In another possible implementation, the communication module 701 is further configured to: receive a second channel dictionary set.

The processing module 702 is further configured to perform dictionary alignment between a first channel dictionary set and the second channel dictionary set, to obtain a correspondence between a second target branch adaptation layer in the second channel dictionary set and a first target branch adaptation layer in the first channel dictionary set.

The communication module 701 is further configured to send first indication information, where the first indication information indicates the correspondence between the second target branch adaptation layer in the second channel dictionary set and the first target branch adaptation layer in the first channel dictionary set.

In a possible implementation, the first channel dictionary set includes a correspondence between a first target branch adaptation layer and a channel label.

In a possible implementation, the communication module 701 is further configured to: send fourth information, where the fourth information indicates K second target branch adaptation layers and weights of the K second target branch adaptation layers, the K second target branch adaptation layers and the weights of the K second target branch adaptation layers are used by a transmit end to process to-be-sent encoded data to obtain the first data, and the K second target branch adaptation layers and the weights of the K second target branch adaptation layers are determined based on the K first target branch adaptation layers and the weights of the K first target branch adaptation layers.

In a possible implementation, the communication module 701 is further configured to:

send a first channel dictionary set; and
receive first indication information, where the first indication information indicates a correspondence between a second target branch adaptation layer in a second channel dictionary set and a first target branch adaptation layer in the first channel dictionary set.

In a possible implementation, the communication module 701 is further configured to:
receive a second channel dictionary set.

The processing module 702 is further configured to perform dictionary alignment between a first channel dictionary set and the second channel dictionary set, to obtain a correspondence between a second target branch adaptation layer in the second channel dictionary set and a first target branch adaptation layer in the first channel dictionary set.

In a possible implementation, the communication module 701 is further configured to: receive a second reference signal;

send third information, where the third information is the same as the first information, or the third information indicates the transmit end to send a reference signal after an interval of first time, and the third information is obtained based on the second reference signal; and
receive data sent by the transmit end within the first time.

For descriptions of the foregoing modules, refer to records of the foregoing embodiments. Details are not described herein again.

For another example, FIG. 7b is a diagram of a structure of another communication apparatus according to an embodiment of this application. The communication apparatus is configured to implement the foregoing communication methods, for example, the communication methods shown in FIG. 2a and FIG. 4.

The communication apparatus includes a communication module 703 and a processing module 704. Details are as follows:
The communication module 703 is configured to send a first reference signal.

The processing module 704 is configured to: when first information is received, and the first information indicates K first target branch adaptation layers and weights of the K first target branch adaptation layers in a first target model at a receive end of the first reference signal, determine, based on the first information, K second target branch adaptation layers corresponding to the K first target branch adaptation layers and weights of the K second target branch adaptation layers, where the first information is obtained based on the first reference signal, and K is a positive integer.

The processing module 704 is further configured to input to-be-sent encoded data into the K second target branch adaptation layers in a second target model for processing, to obtain first data.

The communication module 703 is further configured to send the first data.

In a possible implementation, when M is less than K, the processing module 704 is further configured to update a third target model, to obtain the second target model, where the second target model includes the K second target branch adaptation layers, the third target model includes M second target branch adaptation layers, and M is a positive integer.

In a possible implementation, the K second target branch adaptation layers are used to separately process the to-be-sent encoded data, to obtain data separately processed by the K second target branch adaptation layers; and the weights of the K second target branch adaptation layers are used to perform weighted summation processing on the data separately processed by the K second target branch adaptation layers, to obtain the first data.

In a possible implementation, the communication module 703 is further configured to: when second information is received, and the second information indicates to directly send the to-be-sent encoded data, send the to-be-sent encoded data, where the second information is obtained based on the first reference signal.

In a possible implementation, the communication module 703 is further configured to receive a first channel dictionary set.

The processing module 704 is further configured to perform dictionary alignment between the first channel dictionary set and a second channel dictionary set, to obtain a correspondence between a second target branch adaptation layer in the second channel dictionary set and a first target branch adaptation layer in the first channel dictionary set.

In another possible implementation, the communication module 703 is further configured to:

send a second channel dictionary set; and
receive first indication information, where the first indication information indicates a correspondence between a second target branch adaptation layer in the second channel dictionary set and a first target branch adaptation layer in a first channel dictionary set.

In a possible implementation, the second channel dictionary set includes a correspondence between a second target branch adaptation layer and a channel label.

In a possible implementation, the communication module 703 is further configured to: send a second reference signal;

receive third information, where the third information is the same as the first information, or the third information indicates to send a reference signal after an interval of first time, and the third information is obtained based on the second reference signal; and send data within the first time.

For descriptions of the foregoing modules, refer to records of the foregoing embodiments. Details are not described herein again.

This application further provides a communication apparatus, including:

a communication module, configured to receive a first reference signal; and
a processing module, configured to input the first reference signal into a first target model for processing, to obtain K first target branch adaptation layers and weights of the K first target branch adaptation layers in the first target model, where the first target model includes N first target branch adaptation layers, K is not greater than N, and both K and N are positive integers, where the communication module is further configured to send first information, where the first information indicates the K first target branch adaptation layers and the weights of the K first target branch adaptation layers, and the K first target branch adaptation layers and the weights of the K first target branch adaptation layers are used by a transmit end to process to-be-sent encoded data.

In a possible implementation, the communication module is further configured to receive first data, where the first data is obtained by the transmit end by processing the to-be-sent encoded data. The processing module is further configured to input the first data into the K first target branch adaptation layers for processing, to obtain processed data.

In a possible implementation, the communication module is further configured to send a first channel dictionary set, where the first channel dictionary set is used by the transmit end to determine a correspondence between the N first target branch adaptation layers and M second target branch adaptation layers of the transmit end, and M is a positive integer.

In another possible implementation, the communication module is further configured to receive a second channel dictionary set.

The processing module is further configured to perform dictionary alignment between a first channel dictionary set and the second channel dictionary set, to obtain a correspondence between a second target branch adaptation layer in the second channel dictionary set and a first target branch adaptation layer in the first channel dictionary set.

The communication module is further configured to send first indication information, where the first indication information indicates the correspondence between the second target branch adaptation layer in the second channel dictionary set and the first target branch adaptation layer in the first channel dictionary set.

In a possible implementation, the first channel dictionary set includes a correspondence between a first target branch adaptation layer and a channel label.

In a possible implementation, the communication module is further configured to: receive a second reference signal; send third information, where the third information is the same as the first information, or the third information indicates the transmit end to send a reference signal after an interval of first time, and the third information is obtained based on the second reference signal; and receive data sent by the transmit end within the first time.

For descriptions of the foregoing modules, refer to records of the foregoing embodiments. Details are not described herein again.

According to another aspect, this application further provides a communication apparatus, including:

a communication module, configured to send a first reference signal, where
the communication module is further configured to receive first information, where the first information indicates K first target branch adaptation layers and weights of the K first target branch adaptation layers in a first target model at a receive end of the first reference signal, the first information is obtained based on the first reference signal, and K is a positive integer.

In a possible implementation, the apparatus further includes: a processing module, configured to determine, based on the first information, K second target branch adaptation layers corresponding to the K first target branch adaptation layers and weights of the K second target branch adaptation layers, where
the processing module is further configured to input to-be-sent encoded data into the K second target branch adaptation layers in a second target model for processing, to obtain first data.

The communication module is further configured to send the first data.

In a possible implementation, when M is less than K, the processing module is further configured to update a third target model, to obtain the second target model, where the second target model includes the K second target branch adaptation layers, the third target model includes M second target branch adaptation layers, and M is a positive integer.

In a possible implementation, the communication module is further configured to receive a first channel dictionary set.

The processing module is further configured to perform dictionary alignment between the first channel dictionary set and a second channel dictionary set, to obtain a correspondence between a second target branch adaptation layer in the second channel dictionary set and a first target branch adaptation layer in the first channel dictionary set.

In another possible implementation, the communication module is further configured to: send a second channel dictionary set; and receive first indication information, where the first indication information indicates a correspondence between a second target branch adaptation layer in the second channel dictionary set and a first target branch adaptation layer in a first channel dictionary set.

In a possible implementation, the second channel dictionary set includes a correspondence between a second target branch adaptation layer and a channel label.

In a possible implementation, the communication module is further configured to: send a second reference signal; receive third information, where the third information is the same as the first information, or the third information indicates to send a reference signal after an interval of first time, and the third information is obtained based on the second reference signal; and send data within the first time.

For descriptions of the foregoing modules, refer to records of the foregoing embodiments. Details are not described herein again.

Embodiments of this application further provide a communication apparatus, including:

a communication module, configured to receive a first reference signal; and
a processing module, configured to input the first reference signal into a first target model for processing, to obtain K first target branch adaptation layers and weights of the K first target branch adaptation layers in the first target model, where the first target model includes N first target branch adaptation layers, K is not greater than N, and both K and N are positive integers, where
the communication module is further configured to send fourth information, where the fourth information indicates K second target branch adaptation layers and weights of the K second target branch adaptation layers, the K second target branch adaptation layers and the weights of the K second target branch adaptation layers are used by a transmit end to process to-be-sent encoded data, and the K second target branch adaptation layers and the weights of the K second target branch adaptation layers are determined based on the K first target branch adaptation layers and the weights of the K first target branch adaptation layers.

In a possible implementation, the communication module is further configured to:

receive first data, where the first data is obtained by the transmit end by processing the to-be-sent encoded data; and
the processing module is further configured to input the first data into the K first target branch adaptation layers for processing, to obtain processed data.

In a possible implementation, the communication module is further configured to:

send a first channel dictionary set, where the first channel dictionary set is used by the transmit end to determine a correspondence between the N first target branch adaptation layers and M second target branch adaptation layers of the transmit end, and M is a positive integer; and
receive first indication information, where the first indication information indicates a correspondence between a second target branch adaptation layer in a second channel dictionary set and a first target branch adaptation layer in the first channel dictionary set.

In a possible implementation, the communication module is further configured to:

receive a second channel dictionary set; and
the processing module is further configured to perform dictionary alignment between a first channel dictionary set and the second channel dictionary set, to obtain a correspondence between a second target branch adaptation layer in the second channel dictionary set and a first target branch adaptation layer in the first channel dictionary set.

In a possible implementation, the first channel dictionary set includes a correspondence between a first target branch adaptation layer and a channel label.

In a possible implementation, the communication module is further configured to:

receive a second reference signal;
send third information, where the third information is the same as the first information, or the third information indicates the transmit end to send a reference signal after an interval of first time, and the third information is obtained based on the second reference signal; and
receive data sent by the transmit end within the first time.

Embodiments of this application further provide a communication apparatus, including:

a communication module, configured to send a first reference signal, where
the communication module is further configured to receive fourth information, where the fourth information indicates K second target branch adaptation layers and weights of the K second target branch adaptation layers, the fourth information is obtained based on the first reference signal, and K is a positive integer.

In a possible implementation, the apparatus further includes: a processing module, configured to:
input, based on the fourth information, to-be-sent encoded data into the K second target branch adaptation layers in a second target model for processing, to obtain first data.

The communication module is further configured to send the first data.

In a possible implementation, the communication module is further configured to:
receive a first channel dictionary set.

The processing module is further configured to perform dictionary alignment between the first channel dictionary set and a second channel dictionary set, to obtain a correspondence between a second target branch adaptation layer in the second channel dictionary set and a first target branch adaptation layer in the first channel dictionary set.

The communication module is further configured to send first indication information, where the first indication information indicates the correspondence between the second target branch adaptation layer in the second channel dictionary set and the first target branch adaptation layer in the first channel dictionary set.

In a possible implementation, the communication module is further configured to:
send a second channel dictionary set, where the second channel dictionary set is used by a reference signal receive end to determine a correspondence between N first target branch adaptation layers of the reference signal receive end and M second target branch adaptation layers of a transmit end, and both M and N are positive integers.

In a possible implementation, the second channel dictionary set includes a correspondence between a second target branch adaptation layer and a channel label.

In a possible implementation, the communication module is further configured to:

send a second reference signal;
receive third information, where the third information is the same as the first information, or the third information indicates to send a reference signal after an interval of first time, and the third information is obtained based on the second reference signal; and send data within the first time.

Embodiments of this application further provide a communication apparatus, including:

a communication module, configured to send a first reference signal; and
a processing module, configured to: when fourth information is received, and the fourth information indicates K second target branch adaptation layers and weights of the K second target branch adaptation layers, input, based on the fourth information, to-be-sent encoded data into the K second target branch adaptation layers in a second target model for processing, to obtain first data, where the fourth information is obtained based on the first reference signal, and K is a positive integer, where
the communication module is further configured to send the first data.

In a possible implementation, the K second target branch adaptation layers are used to separately process the to-be-sent encoded data, to obtain data separately processed by the K second target branch adaptation layers; and the weights of the K second target branch adaptation layers are used to perform weighted summation processing on the data separately processed by the K second target branch adaptation layers, to obtain the first data.

In a possible implementation, the communication module is further configured to:
when second information is received, and the second information indicates to directly send the to-be-sent encoded data, send the to-be-sent encoded data, where the second information is obtained based on the first reference signal.

In a possible implementation, the communication module is further configured to:
receive a first channel dictionary set.

The processing module is further configured to perform dictionary alignment between the first channel dictionary set and a second channel dictionary set, to obtain a correspondence between a second target branch adaptation layer in the second channel dictionary set and a first target branch adaptation layer in the first channel dictionary set.

The communication module is further configured to send first indication information, where the first indication information indicates the correspondence between the second target branch adaptation layer in the second channel dictionary set and the first target branch adaptation layer in the first channel dictionary set.

In a possible implementation, the communication module is further configured to:
send a second channel dictionary set, where the second channel dictionary set is used by a reference signal receive end to determine a correspondence between N first target branch adaptation layers of the reference signal receive end and M second target branch adaptation layers of a transmit end, and both M and N are positive integers.

In a possible implementation, the second channel dictionary set includes a correspondence between a second target branch adaptation layer and a channel label.

In a possible implementation, the processing module is further configured to:

send a second reference signal;
receive third information, where the third information is the same as the first information, or the third information indicates to send a reference signal after an interval of first time, and the third information is obtained based on the second reference signal; and
send data within the first time.

Embodiments of this application further provide a target model training apparatus. A target model includes a target encoding network, a target decoding network, and a first target model, and the first target model includes a first target channel feature extraction network, N first target branch adaptation layers, and a target sparse gating module. The apparatus includes:

a first training module, configured to train an initial channel feature extraction network, to obtain the first target channel feature extraction network and a first channel dictionary set;
a second training module, configured to train N initial branch adaptation layers based on the target encoding network and the target decoding network, to obtain the N first target branch adaptation layers, where N is a quantity of first target branch adaptation layers in the first channel dictionary set; and
a third training module, configured to train an initial sparse gating module based on the target encoding network, the target decoding network, the first target channel feature extraction network, and the N first target branch adaptation layers, to obtain the target sparse gating module.

Optionally, the first channel dictionary set includes a correspondence between a first target branch adaptation layer and a channel label.

In a possible implementation, the first training module is configured to train the initial channel feature extraction network for a plurality of times, to obtain the first target channel feature extraction network and the first channel dictionary set. The initial channel feature extraction network is obtained based on labeled historical channel information or by pre-training a preset channel model.

When a channel feature extraction network $U_{t-1}$ is trained for a $t^{th}$ time, both unlabeled channel information and the labeled historical channel information are input into the channel feature extraction network $U_{t-1}$ for processing, to obtain channel distribution information respectively corresponding to the unlabeled channel information and the labeled historical channel information. $N_{t-1}$ clustering centers are obtained based on the channel distribution information. A predicted channel dictionary set is obtained based on the $N_{t-1}$ clustering centers and the channel distribution information. Then, a first loss value is obtained through calculation based on the predicted channel dictionary set and an annotated channel dictionary set, and a parameter of the channel feature extraction network $U_{t-1}$ is adjusted based on the first loss value. t=t+1 is made, the foregoing steps are repeatedly performed until a quantity of iterations reaches a preset quantity of times, the channel feature extraction network $U_{t-1}$ is used as the first target channel feature extraction network, and the predicted channel dictionary set is used as the first channel dictionary set.

In a possible implementation, the second training module is configured to: when an $m^{th}$ initial branch adaptation layer is trained for the $t^{th}$ time, input first sample data into the target encoding network and the preset channel model for processing, to obtain second sample data; input the second sample data into the $m^{th}$ initial branch adaptation layer for processing, to obtain data processed by the $m^{th}$ initial branch adaptation layer, where m is a positive integer, and m is not greater than N; input the data processed by the $m^{th}$ initial branch adaptation layer into the target decoding network for processing, to obtain third sample data; then, obtain a second loss value through calculation based on the first sample data and the third sample data, and adjust parameters of the $m^{th}$ initial branch adaptation layer based on the second loss value; make t=t+1, repeatedly perform the foregoing steps until a stop condition is met, and use the $m^{th}$ initial branch adaptation layer as an $m^{th}$ first target branch adaptation layer; and

make m=m+1, and repeatedly perform the foregoing steps until m=N, to obtain the N first target branch adaptation layers.

In a possible implementation, the apparatus further includes: a communication module, configured to send second indication information, where the second indication information indicates the $m^{th}$ initial branch adaptation layer to be trained.

In a possible implementation, the third training module is configured to train the initial sparse gating module for a plurality of times, to obtain the target sparse gating module.

When a sparse gating module $X_{t-1}$ is trained for the $t^{th}$ time, fourth sample data is input into the target encoding network and the preset channel model for processing, to obtain fifth sample data; the fifth sample data is input into the first target channel feature extraction network for processing, to obtain channel distribution information training data and channel classification information training data; both the channel distribution information training data and the channel classification information training data are input into the sparse gating module $X_{t-1}$ for processing, to obtain R first target branch adaptation layer samples corresponding to the channel distribution information training data and weight samples of the R first target branch adaptation layers, where R is a positive integer, and R is not greater than N; the fifth sample data is processed based on the R first target branch adaptation layer samples and the weight samples of the R first target branch adaptation layers, to obtain processed training data; the processed training data is input into the target decoding network for processing, to obtain sixth sample data; then, a third loss value is obtained through calculation based on the fourth sample data, the sixth sample data, and the weight samples of the R first target branch adaptation layers, and a parameter of the sparse gating module $X_{t-1}$ is adjusted based on the third loss value; and t=t+1 is made, the foregoing steps are repeatedly performed until a stop condition is met, and the sparse gating module $X_{t-1}$ is used as the target sparse gating module.

For descriptions of the foregoing modules, refer to records of the foregoing embodiments. Details are not described herein again.

It should be understood that division into the modules in the foregoing apparatuses is merely logical function division. During actual implementation, all or some of the modules may be integrated into one physical entity, or may be physically separated. In addition, the module in the communication apparatus or the target model training apparatus may be implemented in a form of software invoked by a processor. For example, the communication apparatus includes the processor. The processor is connected to a memory. The memory stores instructions. The processor invokes the instructions stored in the memory, to implement any one of the foregoing methods or implement a function of each module of the apparatus. The processor is, for example, a general-purpose processor, for example, a central processing unit (central processing unit, CPU) or a microprocessor, and the memory is a memory inside the apparatus or a memory outside the apparatus. Alternatively, the modules in the apparatus may be implemented in a form of a hardware circuit, and the hardware circuit may be designed to implement functions of some or all of the units. The hardware circuit may be understood as one or more processors. For example, in an implementation, the hardware circuit is an application-specific integrated circuit (application-specific integrated circuit, ASIC), and a logical relationship between elements in the circuit is designed to implement the functions of some or all of the units. For another example, in another implementation, the hardware circuit may be implemented by using a programmable logic device (programmable logic device, PLD). A field programmable gate array (field programmable gate array, FPGA) is used as an example. The hardware circuit may include a large quantity of logic gate circuits, and a connection relationship between the logic gate circuits is configured based on a configuration file, to implement the functions of some or all of the units. All the modules of the foregoing apparatuses may be implemented in the form of software invoked by the processor, or may be implemented in a form of the hardware circuit, or some modules may be implemented in the form of software invoked by the processor, and a remaining part may be implemented in the form of the hardware circuit.

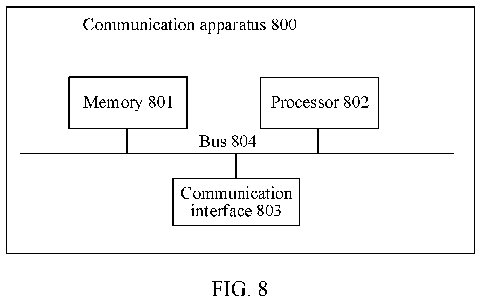

FIG. 8 is a diagram of a hardware structure of still another communication apparatus according to an embodiment of this application. The communication apparatus 800 (the apparatus 800 may be specifically a computer device) shown in FIG. 8 includes a memory 801, a processor 802, a communication interface 803, and a bus 804. The memory 801, the processor 802, and the communication interface 803 are communicatively connected to each other by using the bus 804.

The memory 801 may be a read only memory (read-only memory, ROM), a static storage device, a dynamic storage device, or a random access memory (random access memory, RAM).

The memory 801 may store a program. When the program stored in the memory 801 is executed by the processor 802, the processor 802 and the communication interface 803 are configured to perform steps in the communication method or the target model training method in embodiments of this application.

The processor 802 is a circuit having a signal processing capability. In an implementation, the processor 802 may be a circuit having an instruction reading and running capability, for example, a central processing unit CPU, a microprocessor, a graphics processing unit (graphics processing unit, GPU) (which may be understood as a microprocessor), a digital signal processor (digital signal processor, DSP), or the like. In another implementation, the processor 802 may implement a specific function based on a logical relationship of a hardware circuit. The logical relationship of the hardware circuit is fixed or reconfigurable. For example, the processor 802 is a hardware circuit implemented by using an ASIC or a programmable logic device PLD, for example, an FPGA. In the reconfigurable hardware circuit, a process in which the processor loads a configuration document to implement a hardware circuit configuration may be understood as a process in which the processor loads instructions to implement functions of some or all of the foregoing modules. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). The processor 802 is configured to execute a related program, to implement functions that need to be performed by units in the communication apparatus or the target model training apparatus in embodiments of this application, or perform the communication method or the target model training method in the method embodiments of this application.

It can be learned that modules in the foregoing apparatuses may be one or more processors (or processing circuits) configured to implement the foregoing methods, for example, a CPU, a GPU, an NPU, a TPU, a DPU, a microprocessor, a DSP, an ASIC, an FPGA, or a combination of at least two of these processor forms.

In addition, all or some of the modules of the apparatuses may be integrated, or may be implemented independently. In an implementation, the modules may be integrated together and implemented in a form of a system-on-a-chip (system-on-a-chip, SoC). The SoC may include at least one processor, configured to implement any one of the methods or implement functions of the modules in the apparatuses. Types of the at least one processor may be different. For example, the at least one processor includes a CPU and an FPGA, a CPU and an artificial intelligence processor, or a CPU and a GPU.

The communication interface 803 uses a transceiver apparatus, for example, but not limited to, a transceiver, to implement communication between the apparatus 800 and another device or a communication network. For example, data may be obtained through the communication interface 803.

The bus 804 may include a path for transmitting information between various components (for example, the memory 801, the processor 802, and the communication interface 803) of the apparatus 800.

It should be noted that, although only the memory, the processor, and the communication interface are shown in the apparatus 800 shown in FIG. 8, during specific implementation, a person skilled in the art should understand that the apparatus 800 further includes another device necessary for normal running. In addition, based on a specific requirement, a person skilled in the art should understand that the apparatus 800 may further include a hardware device for implementing another additional function. In addition, a person skilled in the art should understand that the apparatus 800 may include only devices necessary for implementing embodiments of this application, but not necessarily include all the devices shown in FIG. 8.

An embodiment of this application further provides a communication system, for example, including the apparatus shown in FIG. 7a and the apparatus shown in FIG. 7b.

An embodiment of this application further provides a computer-readable storage medium. The computer-readable storage medium stores instructions. When the instructions are run on a computer or a processor, the computer or the processor is enabled to perform one or more steps in any one of the foregoing methods.

An embodiment of this application further provides a computer program product including instructions. When the computer program product runs on a computer or a processor, the computer or the processor is enabled to perform one or more steps in any one of the foregoing methods.

It should be understood that unless otherwise specified, "/" in descriptions of this application represents an "or" relationship between associated objects. For example, A/B may represent A or B. A and B may be singular or plural. In addition, in the descriptions of this application, "a plurality of" means two or more than two unless otherwise specified. "At least one of the following items (pieces)" or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same functions or functions. A person skilled in the art may understand that the terms such as "first" and "second" do not limit a quantity or an execution sequence, and the terms such as "first" and "second" do not indicate a definite difference. In addition, in embodiments of this application, a term such as "example" or "for example" are used to represent giving an example, an illustration, or a description. Any embodiment or design solution described as an "example" or "for example" in embodiments of this application should not be explained as being more preferred or having more advantages than another embodiment or design solution. Exactly, use of the term such as "example" or "for example" is intended to present a related concept in a specific manner for ease of understanding.

In several embodiments provided in this application, it should be understood that the disclosed systems, apparatuses, and methods may be implemented in other manners. For example, unit division is merely logical function division and may be another division during actual implementation. For example, a plurality of units or components may be combined or integrated into another system, or some features may be ignored or not performed. The displayed or discussed mutual couplings or direct couplings or communication connections may be implemented through some interfaces. The indirect couplings or communication connections between the apparatuses or units may be implemented in electronic, mechanical, or other forms.

The units described as separate components may or may not be physically separate, and components displayed as units may or may not be physical units, in other words, may be located in one position, or may be distributed on a plurality of network units. Some or all of the units may be selected based on an actual requirement to achieve the objectives of the solutions of the embodiments.

All or some of the foregoing embodiments may be implemented by software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium, or transmitted through the computer-readable storage medium. The computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, like a server or a data center that integrates one or more usable media. The usable medium may be a read-only memory (read-only memory, ROM), a random access memory (random access memory, RAM), or a magnetic medium, for example, a floppy disk, a hard disk, a magnetic tape, a magnetic disk, or an optical medium, for example, a digital versatile disc (digital versatile disc, DVD), or a semiconductor medium, for example, a solid-state disk (solid-state disk, SSD).

The foregoing descriptions are merely specific implementations of embodiments of this application, but are not intended to limit the protection scope of embodiments of this application. Any variation or replacement within the technical scope disclosed in embodiments of this application shall fall within the protection scope of embodiments of this application. Therefore, the protection scope of embodiments of this application shall be subject to the protection scope of the claims.

**Claims**

1. A communication method, comprising:

   receiving a first reference signal;
   inputting the first reference signal into a first target model for processing, to obtain K first target branch adaptation layers and weights of the K first target branch adaptation layers in the first target model, wherein the first target model comprises N first target branch adaptation layers, K is not greater than N, and both K and N are positive integers; and
   sending first information, wherein the first information indicates the K first target branch adaptation layers and the weights of the K first target branch adaptation layers, and the K first target branch adaptation layers and the weights of the K first target branch adaptation layers are used by a transmit end to process to-be-sent encoded data.

2. The method according to claim 1, wherein the method further comprises:

   receiving first data, wherein the first data is obtained by the transmit end by processing the to-be-sent encoded data; and inputting the first data into the K first target branch adaptation layers for processing, to obtain processed data.

3. The method according to claim 1 or 2, wherein the method further comprises:
   sending a first channel dictionary set, wherein the first channel dictionary set is used by the transmit end to determine a correspondence between the N first target branch adaptation layers and M second target branch adaptation layers of the transmit end, and M is a positive integer.

4. The method according to claim 1 or 2, wherein the method further comprises:

   receiving a second channel dictionary set; performing dictionary alignment between a first channel dictionary set and the second channel dictionary set, to obtain a correspondence between a second target branch adaptation layer in the second channel dictionary set and a first target branch adaptation layer in the first channel dictionary set; and sending first indication information, wherein the first indication information indicates the correspondence between the second target branch adaptation layer in the second channel dictionary set and the first target branch adaptation layer in the first channel dictionary set.

5. The method according to claim 3 or 4, wherein the first channel dictionary set comprises a correspondence between a first target branch adaptation layer and a channel label.

6. The method according to any one of claims 1 to 5, wherein the method further comprises:

   receiving a second reference signal; sending third information, wherein the third information is the same as the first information, or the third information indicates the transmit end to send a reference signal after an interval of first time, and the third information is obtained based on the second reference signal; and receiving data sent by the transmit end within the first time.

7. A communication method, comprising:

   receiving a first reference signal; inputting the first reference signal into a first target model for processing, to obtain K first target branch adaptation layers and weights of the K first target branch adaptation layers in the first target model, wherein the first target model comprises N first target branch adaptation layers, K is not greater than N, and both K and N are positive integers; and sending fourth information, wherein the fourth information indicates K second target branch adaptation layers and weights of the K second target branch adaptation layers, the K second target branch adaptation layers and the weights of the K second target branch adaptation layers are used by a transmit end to process to-be-sent encoded data, and the K second target branch adaptation layers and the weights of the K second target branch adaptation layers are determined based on the K first target branch adaptation layers and the weights of the K first target branch adaptation layers.

8. The method according to claim 7, wherein the method further comprises:

   receiving first data, wherein the first data is obtained by the transmit end by processing the to-be-sent encoded data; and inputting the first data into the K first target branch adaptation layers for processing, to obtain processed data.

9. The method according to claim 7 or 8, wherein the method further comprises:

   sending a first channel dictionary set, wherein the first channel dictionary set is used by the transmit end to determine a correspondence between the N first target branch adaptation layers and M second target branch adaptation layers of the transmit end, and M is a positive integer; and receiving first indication information, wherein the first indication information indicates a correspondence between a second target branch adaptation layer in the second channel dictionary set and a first target branch adaptation layer in the first channel dictionary set.

10. The method according to claim 7 or 8, wherein the method further comprises:

   receiving a second channel dictionary set; and performing dictionary alignment between a first channel dictionary set and the second channel dictionary set, to obtain a correspondence between a second target branch adaptation layer in the second channel dictionary set and a first target branch adaptation layer in the first channel dictionary set.

11. The method according to claim 9 or 10, wherein the first channel dictionary set comprises a correspondence between a first target branch adaptation layer and a channel label.

12. The method according to any one of claims 7 to 11, wherein the method further comprises:

receiving a second reference signal;
sending fifth information, wherein the fifth information is the same as the fourth information, or the fifth information indicates the transmit end to send a reference signal after an interval of first time, and the fifth information is obtained based on the second reference signal; and
receiving data sent by the transmit end within the first time.

13. A communication method, comprising:

sending a first reference signal; and
receiving first information, wherein the first information indicates K first target branch adaptation layers and weights of the K first target branch adaptation layers in a first target model at a receive end of the first reference signal, the first information is obtained based on the first reference signal, and K is a positive integer.

14. The method according to claim 13, wherein the method further comprises:

determining, based on the first information, K second target branch adaptation layers corresponding to the K first target branch adaptation layers and weights of the K second target branch adaptation layers;
inputting to-be-sent encoded data into the K second target branch adaptation layers in a second target model for processing, to obtain first data; and
sending the first data.

15. The method according to claim 14, wherein when M is less than K, a third target model is updated, to obtain the second target model, wherein the second target model comprises the K second target branch adaptation layers, the third target model comprises M second target branch adaptation layers, and M is a positive integer.

16. The method according to any one of claims 13 to 15, wherein the method further comprises:

receiving a first channel dictionary set; and
performing dictionary alignment between the first channel dictionary set and a second channel dictionary set, to obtain a correspondence between a second target branch adaptation layer in the second channel dictionary set and a first target branch adaptation layer in the first channel dictionary set.

17. The method according to any one of claims 13 to 15, wherein the method further comprises:

sending a second channel dictionary set; and
receiving first indication information, wherein the first indication information indicates a correspondence between a second target branch adaptation layer in the second channel dictionary set and a first target branch adaptation layer in a first channel dictionary set.

18. The method according to claim 16 or 17, wherein the second channel dictionary set comprises a correspondence between a second target branch adaptation layer and a channel label.

19. The method according to any one of claims 13 to 18, wherein the method further comprises:

sending a second reference signal;
receiving third information, wherein the third information is the same as the first information, or the third information indicates to send a reference signal after an interval of first time, and the third information is obtained based on the second reference signal; and
sending data within the first time.

20. A communication method, comprising:

sending a first reference signal; and
receiving fourth information, wherein the fourth information indicates K second target branch adaptation layers and weights of the K second target branch adaptation layers, the fourth information is obtained based on the first reference signal, and K is a positive integer.

21. The method according to claim 20, wherein the method further comprises:

inputting, based on the fourth information, to-be-sent encoded data into the K second target branch adaptation layers in a second target model for processing, to obtain first data; and
sending the first data.

**22.** The method according to claim 20 or 21, wherein the method further comprises:

receiving a first channel dictionary set;
performing dictionary alignment between the first channel dictionary set and a second channel dictionary set, to obtain a correspondence between a second target branch adaptation layer in the second channel dictionary set and a first target branch adaptation layer in the first channel dictionary set; and
sending first indication information, wherein the first indication information indicates the correspondence between the second target branch adaptation layer in the second channel dictionary set and the first target branch adaptation layer in the first channel dictionary set.

**23.** The method according to claim 20 or 21, wherein the method further comprises:
sending a second channel dictionary set, wherein the second channel dictionary set is used by a reference signal receive end to determine a correspondence between N first target branch adaptation layers of the reference signal receive end and M second target branch adaptation layers of a transmit end, and both M and N are positive integers.

**24.** The method according to claim 22 or 23, wherein the second channel dictionary set comprises a correspondence between a second target branch adaptation layer and a channel label.

**25.** The method according to any one of claims 20 to 24, wherein the method further comprises:

sending a second reference signal;
receiving fifth information, wherein the fifth information is the same as the fourth information, or the fifth information indicates to send a reference signal after an interval of first time, and the fifth information is obtained based on the second reference signal; and
sending data within the first time.

**26.** A communication method, comprising:

receiving a first reference signal;
inputting the first reference signal into a first target model for processing, to obtain K first target branch adaptation layers and weights of the K first target branch adaptation layers in the first target model, wherein the first target model comprises N first target branch adaptation layers, K is not greater than N, and both K and N are positive integers;
receiving first data; and
inputting the first data into the K first target branch adaptation layers for processing, to obtain processed data, wherein a largest weight in the weights of the K first target branch adaptation layers is not less than a preset value.

**27.** The method according to claim 26, wherein the first target model further comprises a first target channel feature extraction network and a target sparse gating module;

the first target channel feature extraction network is used to process the first reference signal, to obtain channel distribution information and channel classification information corresponding to the channel distribution information; and
the target sparse gating module is configured to obtain the K first target branch adaptation layers and the weights of the K first target branch adaptation layers through calculation based on the channel distribution information and the channel classification information.

**28.** The method according to claim 26 or 27, wherein the K first target branch adaptation layers are used to separately process the first data, to obtain data separately processed by the K first target branch adaptation layers; and the weights of the K first target branch adaptation layers are used to perform weighted summation processing on the data separately processed by the K first target branch adaptation layers, to obtain the processed data.

**29.** The method according to any one of claims 26 to 28, wherein the method further comprises:
when the largest weight in the weights of the K first target branch adaptation layers is less than the preset value, decoding the first data, to obtain processed data.

**30.** The method according to any one of claims 26 to 29, wherein the method further comprises:
sending first information, wherein the first information indicates the K first target branch adaptation layers and the weights of the K first target branch adaptation layers, and the K first target branch adaptation layers and the weights of the K first target branch adaptation layers are used by a transmit end to process to-be-sent encoded data to obtain the first data.

**31.** The method according to any one of claims 26 to 30, wherein the method further comprises:
sending a first channel dictionary set, wherein the first channel dictionary set is used by the transmit end to determine a correspondence between the N first target branch adaptation layers and M second target branch adaptation layers of the transmit end, and M is a positive integer.

**32.** The method according to any one of claims 26 to 30, wherein the method further comprises:

receiving a second channel dictionary set;
performing dictionary alignment between a first channel dictionary set and the second channel dictionary set, to obtain a correspondence between a second target branch adaptation layer in the second channel dictionary set and a first target branch adaptation layer in the first channel dictionary set; and
sending first indication information, wherein the first indication information indicates the correspondence between the second target branch adaptation layer in the second channel dictionary set and the first target branch adaptation layer in the first channel dictionary set.

**33.** The method according to any one of claims 26 to 29, wherein the method further comprises:
sending fourth information, wherein the fourth information indicates K second target branch adaptation layers and weights of the K second target branch adaptation layers, the K second target branch adaptation layers and the weights of the K second target branch adaptation layers are used by a transmit end to process to-be-sent encoded data to obtain the first data, and the K second target branch adaptation layers and the weights of the K second target branch adaptation layers are determined based on the K first target branch adaptation layers and the weights of the K first target branch adaptation layers.

**34.** The method according to any one of claims 26 to 29, and 33, wherein the method further comprises:

sending a first channel dictionary set; and
receiving first indication information, wherein the first indication information indicates a correspondence between a second target branch adaptation layer in a second channel dictionary set and a first target branch adaptation layer in the first channel dictionary set.

**35.** The method according to any one of claims 26 to 29, and 33, wherein the method further comprises:

receiving a second channel dictionary set; and
performing dictionary alignment between a first channel dictionary set and the second channel dictionary set, to obtain a correspondence between a second target branch adaptation layer in the second channel dictionary set and a first target branch adaptation layer in the first channel dictionary set.

**36.** The method according to claim 31, 32, 34, or 35, wherein the first channel dictionary set comprises a correspondence between a first target branch adaptation layer and a channel label.

**37.** The method according to any one of claims 26 to 36, wherein the method further comprises:
sending second information when the largest weight in the weights of the K first target branch adaptation layers is less than the preset value, wherein the second information indicates the transmit end to directly send the first data.

**38.** The method according to claim 30, wherein the method further comprises:

receiving a second reference signal;
sending third information, wherein the third information is the same as the first information, or the third information indicates the transmit end to send a reference signal after an interval of first time, and the third information is obtained based on the second reference signal; and
receiving data sent by the transmit end within the first time.

**39.** A communication method, comprising:

sending a first reference signal;
when first information is received, and the first information indicates K first target branch adaptation layers and weights of the K first target branch adaptation layers in a first target model at a receive end of the first reference signal, determining, based on the first information, K second target branch adaptation layers corresponding to the K first target branch adaptation layers and weights of the K second target branch adaptation layers, wherein the first information is obtained based on the first reference signal, and K is a positive integer;
inputting to-be-sent encoded data into the K second target branch adaptation layers in a second target model for processing, to obtain first data; and
sending the first data.

**40.** The method according to claim 39, wherein
when M is less than K, a third target model is updated, to obtain the second target model, wherein the second target model comprises the K second target branch adaptation layers, the third target model comprises M second target branch adaptation layers, and M is a positive integer.

**41.** The method according to claim 39 or 40, wherein the K second target branch adaptation layers are used to separately process the to-be-sent encoded data, to obtain data separately processed by the K second target branch adaptation layers; and the weights of the K second target branch adaptation layers are used to perform weighted summation processing on the data separately processed by the K second target branch adaptation layers, to obtain the first data.

42. The method according to any one of claims 39 to 41, wherein the method further comprises:
when second information is received, and the second information indicates to directly send the to-be-sent encoded data, sending the to-be-sent encoded data, wherein the second information is obtained based on the first reference signal.

43. The method according to any one of claims 39 to 42, wherein the method further comprises:

receiving a first channel dictionary set; and performing dictionary alignment between the first channel dictionary set and a second channel dictionary set, to obtain a correspondence between a second target branch adaptation layer in the second channel dictionary set and a first target branch adaptation layer in the first channel dictionary set.

44. The method according to any one of claims 39 to 42, wherein the method further comprises:

sending a second channel dictionary set; and receiving first indication information, wherein the first indication information indicates a correspondence between a second target branch adaptation layer in the second channel dictionary set and a first target branch adaptation layer in a first channel dictionary set.

45. The method according to claim 43 or 44, wherein the second channel dictionary set comprises a correspondence between a second target branch adaptation layer and a channel label.

46. The method according to any one of claims 39 to 45, wherein the method further comprises:

sending a second reference signal; receiving third information, wherein the third information is the same as the first information, or the third information indicates to send a reference signal after an interval of first time, and the third information is obtained based on the second reference signal; and sending data within the first time.

47. A communication method, comprising:

sending a first reference signal; when fourth information is received, and the fourth information indicates K second target branch adaptation layers and weights of the K second target branch adaptation layers, inputting, based on the fourth information, to-be-sent encoded data into the K second target branch adaptation layers in a second target model for processing, to obtain first data, wherein the fourth information is obtained based on the first reference signal, and K is a positive integer; and sending the first data.

48. The method according to claim 47, wherein the K second target branch adaptation layers are used to separately process the to-be-sent encoded data, to obtain data separately processed by the K second target branch adaptation layers; and the weights of the K second target branch adaptation layers are used to perform weighted summation processing on the data separately processed by the K second target branch adaptation layers, to obtain the first data.

49. The method according to claim 47 or 48, wherein the method further comprises:
when second information is received, and the second information indicates to directly send the to-be-sent encoded data, sending the to-be-sent encoded data, wherein the second information is obtained based on the first reference signal.

50. The method according to any one of claims 47 to 49, wherein the method further comprises:

receiving a first channel dictionary set; performing dictionary alignment between the first channel dictionary set and a second channel dictionary set, to obtain a correspondence between a second target branch adaptation layer in the second channel dictionary set and a first target branch adaptation layer in the first channel dictionary set; and sending first indication information, wherein the first indication information indicates the correspondence between the second target branch adaptation layer in the second channel dictionary set and the first target branch adaptation layer in the first channel dictionary set.

51. The method according to any one of claims 47 to 49, wherein the method further comprises:
sending a second channel dictionary set, wherein the second channel dictionary set is used by a reference signal receive end to determine a correspondence between N first target branch adaptation layers of the reference signal receive end and M second target branch adaptation layers of a transmit end, and both M and N are positive integers.

**52.** The method according to claim 50 or 51, wherein the second channel dictionary set comprises a correspondence between a second target branch adaptation layer and a channel label.

**53.** The method according to any one of claims 47 to 52, wherein the method further comprises:

sending a second reference signal;
receiving fifth information, wherein the fifth information is the same as the fourth information, or the fifth information indicates to send a reference signal after an interval of first time, and the fifth information is obtained based on the second reference signal; and
sending data within the first time.

**54.** A communication apparatus, comprising:

a communication module, configured to receive a first reference signal; and
a processing module, configured to input the first reference signal into a first target model for processing, to obtain K first target branch adaptation layers and weights of the K first target branch adaptation layers in the first target model, wherein the first target model comprises N first target branch adaptation layers, K is not greater than N, and both K and N are positive integers, wherein
the communication module is further configured to send first information, wherein the first information indicates the K first target branch adaptation layers and the weights of the K first target branch adaptation layers, and the K first target branch adaptation layers and the weights of the K first target branch adaptation layers are used by a transmit end to process to-be-sent encoded data.

**55.** The apparatus according to claim 54, wherein the communication module is further configured to:

receive first data, wherein the first data is obtained by the transmit end by processing the to-be-sent encoded data; and
the processing module is further configured to input the first data into the K first target branch adaptation layers for processing, to obtain processed data.

**56.** The apparatus according to claim 54 or 55, wherein the communication module is further configured to:
send a first channel dictionary set, wherein the first channel dictionary set is used by the transmit end to determine a correspondence between the N first target branch adaptation layers and M second target branch adaptation layers of the transmit end, and M is a positive integer.

**57.** The apparatus according to claim 54 or 55, wherein the communication module is further configured to:

receive a second channel dictionary set;
the processing module is further configured to perform dictionary alignment between a first channel dictionary set and the second channel dictionary set, to obtain a correspondence between a second target branch adaptation layer in the second channel dictionary set and a first target branch adaptation layer in the first channel dictionary set; and
the communication module is further configured to send first indication information, wherein the first indication information indicates the correspondence between the second target branch adaptation layer in the second channel dictionary set and the first target branch adaptation layer in the first channel dictionary set.

**58.** The apparatus according to claim 56 or 57, wherein the first channel dictionary set comprises a correspondence between a first target branch adaptation layer and a channel label.

**59.** The apparatus according to any one of claims 54 to 58, wherein the communication module is further configured to:

receive a second reference signal;
send third information, wherein the third information is the same as the first information, or the third information indicates the transmit end to send a reference signal after an interval of first time, and the third information is obtained based on the second reference signal; and
receive data sent by the transmit end within the first time.

**60.** A communication apparatus, comprising:

a communication module, configured to receive a first reference signal; and
a processing module, configured to input the first reference signal into a first target model for processing, to obtain K first target branch adaptation layers and weights of the K first target branch adaptation layers in the first target model, wherein the first target model comprises N first target branch adaptation layers, K is not greater than N, and both K and N are positive integers, wherein
the communication module is further configured to send fourth information, wherein the fourth information indicates K second target branch adaptation layers and weights of the K second target branch adaptation layers, the K second target branch adaptation layers and the weights of the K second target branch adaptation layers are used by a transmit end to process to-be-sent encoded data, and the K second target branch adaptation layers and the weights of the K second target branch adaptation layers are determined based on the K first target branch adaptation layers and the weights of the K first target branch adaptation layers.

61. The apparatus according to claim 60, wherein the communication module is further configured to:

    receive first data, wherein the first data is obtained by the transmit end by processing the to-be-sent encoded data; and
    the processing module is further configured to input the first data into the K first target branch adaptation layers for processing, to obtain processed data.

62. The apparatus according to claim 60 or 61, wherein the communication module is further configured to:

    send a first channel dictionary set, wherein the first channel dictionary set is used by the transmit end to determine a correspondence between the N first target branch adaptation layers and M second target branch adaptation layers of the transmit end, and M is a positive integer; and
    receive first indication information, wherein the first indication information indicates a correspondence between a second target branch adaptation layer in a second channel dictionary set and a first target branch adaptation layer in the first channel dictionary set.

63. The apparatus according to claim 60 or 61, wherein the communication module is further configured to:

    receive a second channel dictionary set; and
    the processing module is further configured to perform dictionary alignment between a first channel dictionary set and the second channel dictionary set, to obtain a correspondence between a second target branch adaptation layer in the second channel dictionary set and a first target branch adaptation layer in the first channel dictionary set.

64. The apparatus according to claim 62 or 63, wherein the first channel dictionary set comprises a correspondence between a first target branch adaptation layer and a channel label.

65. The apparatus according to any one of claims 60 to 64, wherein the communication module is further configured to:

    receive a second reference signal;
    send fifth information, wherein the fifth information is the same as the fourth information, or the fifth information indicates the transmit end to send a reference signal after an interval of first time, and the fifth information is obtained based on the second reference signal; and
    receive data sent by the transmit end within the first time.

66. A communication apparatus, comprising:

    a communication module, configured to send a first reference signal, wherein
    the communication module is further configured to receive first information, wherein the first information indicates K first target branch adaptation layers and weights of the K first target branch adaptation layers in a first target model at a receive end of the first reference signal, the first information is obtained based on the first reference signal, and K is a positive integer.

67. The apparatus according to claim 66, wherein the apparatus further comprises: a processing module, configured to:

    determine, based on the first information, K second target branch adaptation layers corresponding to the K first target branch adaptation layers and weights of the K second target branch adaptation layers, wherein
    the processing module is further configured to input to-be-sent encoded data into the K second target branch adaptation layers in a second target model for processing, to obtain first data; and
    the communication module is further configured to send the first data.

68. The apparatus according to claim 67, wherein when M is less than K, the processing module is further configured to update a third target model, to obtain the second target model, wherein the second target model comprises the K second target branch adaptation layers, the third target model comprises M second target branch adaptation layers, and M is a positive integer.

69. The apparatus according to any one of claims 66 to 68, wherein the communication module is further configured to:

    receive a first channel dictionary set; and
    the processing module is further configured to perform dictionary alignment between the first channel dictionary set and a second channel dictionary set, to obtain a correspondence between a second target branch adaptation layer in the second channel dictionary set and a first target branch adaptation layer in the first channel dictionary set.

70. The apparatus according to any one of claims 66 to 68, wherein the communication module is further configured to:

send a second channel dictionary set; and receive first indication information, wherein the first indication information indicates a correspondence between a second target branch adaptation layer in the second channel dictionary set and a first target branch adaptation layer in a first channel dictionary set.

71. The apparatus according to claim 69 or 70, wherein the second channel dictionary set comprises a correspondence between a second target branch adaptation layer and a channel label.

72. The apparatus according to any one of claims 66 to 71, wherein the communication module is further configured to:

send a second reference signal; receive third information, wherein the third information is the same as the first information, or the third information indicates to send a reference signal after an interval of first time, and the third information is obtained based on the second reference signal; and send data within the first time.

73. A communication apparatus, comprising:

a communication module, configured to send a first reference signal, wherein the communication module is further configured to receive fourth information, wherein the fourth information indicates K second target branch adaptation layers and weights of the K second target branch adaptation layers, the fourth information is obtained based on the first reference signal, and K is a positive integer.

74. The apparatus according to claim 73, wherein the apparatus further comprises: a processing module, configured to:

input, based on the fourth information, to-be-sent encoded data into the K second target branch adaptation layers in a second target model for processing, to obtain first data, wherein

the communication module is further configured to send the first data.

75. The apparatus according to claim 73 or 74, wherein the communication module is further configured to:

receive a first channel dictionary set; the processing module is further configured to perform dictionary alignment between the first channel dictionary set and a second channel dictionary set, to obtain a correspondence between a second target branch adaptation layer in the second channel dictionary set and a first target branch adaptation layer in the first channel dictionary set; and the communication module is further configured to send first indication information, wherein the first indication information indicates the correspondence between the second target branch adaptation layer in the second channel dictionary set and the first target branch adaptation layer in the first channel dictionary set.

76. The apparatus according to claim 73 or 74, wherein the communication module is further configured to: send a second channel dictionary set, wherein the second channel dictionary set is used by a reference signal receive end to determine a correspondence between N first target branch adaptation layers of the reference signal receive end and M second target branch adaptation layers of a transmit end, and both M and N are positive integers.

77. The apparatus according to claim 75 or 76, wherein the second channel dictionary set comprises a correspondence between a second target branch adaptation layer and a channel label.

78. The apparatus according to any one of claims 73 to 77, wherein the communication module is further configured to:

send a second reference signal; receive fifth information, wherein the fifth information is the same as the fourth information, or the fifth information indicates to send a reference signal after an interval of first time, and the fifth information is obtained based on the second reference signal; and send data within the first time.

79. A communication apparatus, comprising:

a communication module, configured to receive a first reference signal; and a processing module, configured to input the first reference signal into a first target model for processing, to obtain K first target branch adaptation layers and weights of the K first target branch adaptation layers in the first target model, wherein the first target model comprises N first target branch adaptation layers, K is not greater than N, and both K and N are positive integers, wherein

the communication module is further configured to receive first data; and

the processing module is further configured to input the first data into the K first target branch adaptation layers for processing, to obtain processed data, wherein a largest weight in the weights of the K first target branch adaptation layers is not less than a preset value.

80. The apparatus according to claim 79, wherein the first target model further comprises a first target channel feature extraction network and a target sparse gating module;

the first target channel feature extraction network is used to process the first reference signal, to obtain channel distribution information and channel classification information corresponding to the channel distribution information; and
the target sparse gating module is configured to obtain the K first target branch adaptation layers and the weights of the K first target branch adaptation layers through calculation based on the channel distribution information and the channel classification information.

81. The apparatus according to claim 79 or 80, wherein the K first target branch adaptation layers are used to separately process the first data, to obtain data separately processed by the K first target branch adaptation layers; and the weights of the K first target branch adaptation layers are used to perform weighted summation processing on the data separately processed by the K first target branch adaptation layers, to obtain the processed data.

82. The apparatus according to any one of claims 79 to 81, wherein the processing module is further configured to:
when the largest weight in the weights of the K first target branch adaptation layers is less than the preset value, decode the first data, to obtain processed data.

83. The apparatus according to any one of claims 79 to 82, wherein the communication module is further configured to:
send first information, wherein the first information indicates the K first target branch adaptation layers and the weights of the K first target branch adaptation layers, and the K first target branch adaptation layers and the weights of the K first target branch adaptation layers are used by a transmit end to process to-be-sent encoded data to obtain the first data.

84. The apparatus according to any one of claims 79 to 83, wherein the communication module is further configured to:
send a first channel dictionary set, wherein the first channel dictionary set is used by the transmit end to determine a correspondence between the N first target branch adaptation layers and M second target branch adaptation layers of the transmit end, and M is a positive integer.

85. The apparatus according to any one of claims 79 to 83, wherein the communication module is further configured to:

receive a second channel dictionary set;
the processing module is further configured to perform dictionary alignment between a first channel dictionary set and the second channel dictionary set, to obtain a correspondence between a second target branch adaptation layer in the second channel dictionary set and a first target branch adaptation layer in the first channel dictionary set; and
the communication module is further configured to send first indication information, wherein the first indication information indicates the correspondence between the second target branch adaptation layer in the second channel dictionary set and the first target branch adaptation layer in the first channel dictionary set.

86. The apparatus according to any one of claims 79 to 82, wherein the communication module is further configured to:
send fourth information, wherein the fourth information indicates K second target branch adaptation layers and weights of the K second target branch adaptation layers, the K second target branch adaptation layers and the weights of the K second target branch adaptation layers are used by a transmit end to process to-be-sent encoded data to obtain the first data, and the K second target branch adaptation layers and the weights of the K second target branch adaptation layers are determined based on the K first target branch adaptation layers and the weights of the K first target branch adaptation layers.

87. The apparatus according to any one of claims 79 to 82, or 86, wherein the communication module is further configured to:

send a first channel dictionary set; and
receive first indication information, wherein the first indication information indicates a correspondence between a second target branch adaptation layer in a second channel dictionary set and a first target branch adaptation layer in the first channel dictionary set.

88. The apparatus according to any one of claims 79 to 82, or 86, wherein the communication module is further configured to:

receive a second channel dictionary set; and the processing module is further configured to perform dictionary alignment between a first channel dictionary set and the second channel dictionary set, to obtain a correspondence between a second target branch adaptation layer in the second channel dictionary set and a first target branch adaptation layer in the first channel dictionary set.

89. The apparatus according to claim 84, 85, 87, or 88, wherein the first channel dictionary set comprises a correspondence between a first target branch adaptation layer and a channel label.

90. The apparatus according to any one of claims 79 to 89, wherein the communication module is further configured to:
send second information when the largest weight in the weights of the K first target branch adaptation layers is less than the preset value, wherein the second information indicates the transmit end to directly send the first data.

91. The apparatus according to claim 83, wherein the communication module is further configured to:

receive a second reference signal;
send third information, wherein the third information is the same as the first information, or the third information indicates the transmit end to send a reference signal after an interval of first time, and the third information is obtained based on the second reference signal; and
receive data sent by the transmit end within the first time.

92. A communication apparatus, comprising:

a communication module, configured to send a first reference signal; and
a processing module, configured to: when first information is received, and the first information indicates K first target branch adaptation layers and weights of the K first target branch adaptation layers in a first target model at a receive end of the first reference signal, determine, based on the first information, K second target branch adaptation layers corresponding to the K first target branch adaptation layers and weights of the K second target branch adaptation layers, wherein the first information is obtained based on the first reference signal, and K is a positive integer, wherein
the processing module is further configured to input to-be-sent encoded data into the K second target branch adaptation layers in a second target model for processing, to obtain first data; and
the communication module is further configured to send the first data.

93. The apparatus according to claim 92, wherein when M is less than K, the processing module is further configured to update a third target model, to obtain the second target model, wherein the second target model comprises the K second target branch adaptation layers, the third target model comprises M second target branch adaptation layers, and M is a positive integer.

94. The apparatus according to claim 92 or 93, wherein the K second target branch adaptation layers are used to separately process the to-be-sent encoded data, to obtain data separately processed by the K second target branch adaptation layers; and the weights of the K second target branch adaptation layers are used to perform weighted summation processing on the data separately processed by the K second target branch adaptation layers, to obtain the first data.

95. The apparatus according to any one of claims 92 to 94, wherein the communication module is further configured to:
when second information is received, and the second information indicates to directly send the to-be-sent encoded data, send the to-be-sent encoded data, wherein the second information is obtained based on the first reference signal.

96. The apparatus according to any one of claims 92 to 95, wherein the communication module is further configured to:

receive a first channel dictionary set; and
the processing module is further configured to perform dictionary alignment between the first channel dictionary set and a second channel dictionary set, to obtain a correspondence between a second target branch adaptation layer in the second channel dictionary set and a first target branch adaptation layer in the first channel dictionary set.

97. The apparatus according to any one of claims 92 to 95, wherein the communication module is further configured to:

send a second channel dictionary set; and receive first indication information, wherein the first indication information indicates a correspondence between a second target branch adaptation layer in the second channel dictionary set and a first target branch adaptation layer in a first channel dictionary set.

98. The apparatus according to claim 96 or 97, wherein the second channel dictionary set comprises a correspondence between a second target branch adaptation layer and a channel label.

99. The apparatus according to any one of claims 92 to 98, wherein the communication module is further configured to:

send a second reference signal; receive third information, wherein the third information is the same as the first information, or the third information indicates to send a reference signal after an interval of first time, and the third information is obtained based on the second reference signal; and send data within the first time.

100.
A communication apparatus, comprising:

a communication module, configured to send a first reference signal; and a processing module, configured to: when fourth information is received, and the fourth information indicates K second target branch adaptation layers and weights of the K second target branch adaptation layers, input, based on the fourth information, to-be-sent encoded data into the K second target branch adaptation layers in a second target model for processing, to obtain first data, wherein the fourth information is obtained based on the first reference signal, and K is a positive integer, wherein the communication module is further configured to send the first data.

101.
The apparatus according to claim 100, wherein the K second target branch adaptation layers are used to separately process the to-be-sent encoded data, to obtain data separately processed by the K second target branch adaptation layers; and the weights of the K second target branch adaptation layers are used to perform weighted summation processing on the data separately processed by the K second target branch adaptation layers, to obtain the first data.

102.
The apparatus according to claim 100 or 101, wherein the communication module is further configured to: when second information is received, and the second information indicates to directly send the to-be-sent encoded data, send the to-be-sent encoded data, wherein the second information is obtained based on the first reference signal.

103.
The apparatus according to any one of claims 100 to 102, wherein the communication module is further configured to:

receive a first channel dictionary set; the processing module is further configured to perform dictionary alignment between the first channel dictionary set and a second channel dictionary set, to obtain a correspondence between a second target branch adaptation layer in the second channel dictionary set and a first target branch adaptation layer in the first channel dictionary set; and the communication module is further configured to send first indication information, wherein the first indication information indicates the correspondence between the second target branch adaptation layer in the second channel dictionary set and the first target branch adaptation layer in the first channel dictionary set.

104.
The apparatus according to any one of claims 100 to 102, wherein the communication module is further configured to:
send a second channel dictionary set, wherein the second channel dictionary set is used by a reference signal receive end to determine a correspondence between N first target branch adaptation layers of the reference signal receive end and M second target branch adaptation layers of a transmit end, and both M and N are positive integers.

105.
The apparatus according to claim 103 or 104, wherein the second channel dictionary set comprises a correspondence between a second target branch adaptation layer and a channel label.

106.
The apparatus according to any one of claims 100 to 105, wherein the processing module is further configured to:

send a second reference signal; receive fifth information, wherein the fifth information is the same as the fourth information, or the fifth information indicates to send a reference signal after an interval of first time, and the fifth information is obtained based on the second reference signal; and

send data within the first time.

100 to 106.

**107.**
A communication apparatus, wherein the communication apparatus comprises one or more processors, wherein the one or more processors are configured to execute a computer program stored in one or more memories, to enable the communication apparatus to implement the method according to any one of claims 1 to 6, the method according to any one of claims 7 to 12, the method according to any one of claims 13 to 19, the method according to any one of claims 20 to 25, the method according to any one of claims 26 to 38, the method according to any one of claims 39 to 46, or the method according to any one of claims 47 to 53.

**108.**
The communication apparatus according to claim 107, wherein the communication apparatus further comprises the one or more memories.

**109.**
The communication apparatus according to claim 107 or 108, wherein the communication apparatus is a chip or a chip system.

**110.**
A computer-readable storage medium, wherein the computer-readable storage medium stores instructions, and when the instructions are executed by a processor, the method according to any one of claims 1 to 6, the method according to any one of claims 7 to 12, the method according to any one of claims 13 to 19, the method according to any one of claims 20 to 25, the method according to any one of claims 26 to 38, the method according to any one of claims 39 to 46, or the method according to any one of claims 47 to 53 is implemented.

**111.** A computer program product, comprising a computer program, wherein when the computer program is executed, the method according to any one of claims 1 to 6, the method according to any one of claims 7 to 12, the method according to any one of claims 13 to 19, the method according to any one of claims 20 to 25, the method according to any one of claims 26 to 38, the method according to any one of claims 39 to 46, or the method according to any one of claims 47 to 53 is implemented.

**112.**
A communication system, comprising the apparatus according to any one of claims 54 to 59 and the apparatus according to any one of claims 66 to 72, comprising the apparatus according to any one of claims 60 to 65 and the apparatus according to any one of claims 73 to 78, or comprising the apparatus according to any one of claims 79 to 91 and the apparatus according to any one of claims 92 to 99 or the apparatus according to any one of claims

FIG. 1a

FIG. 1b

FIG. 1c

Base station

Terminal UE

201: Send a first reference signal

First reference signal →

202: Receive the first reference signal

203: Input the first reference signal into a first target model for processing, to obtain K first target branch adaptation layers and weights of the K first target branch adaptation layers in the first target model

204: Send first data

First data →

205: Receive the first data

206: Input the first data into the K first target branch adaptation layers for processing, to obtain processed data, where a largest weight in the weights of the K first target branch adaptation layers is not less than a preset value

FIG. 2a

FIG. 2b

FIG. 3

Base station

Terminal UE

401: Send a first reference signal

First reference signal →

402: Receive the first reference signal

403: Input the first reference signal into a first target model for processing, to obtain K first target branch adaptation layers and weights of the K first target branch adaptation layers in the first target model

404: Send first information when a largest weight in the weights of the K first target branch adaptation layers is not less than a preset value

← First information

405: Receive the first information, and determine K second target branch adaptation layers and weights of the K second target branch adaptation layers based on the first information

406: Input to-be-sent encoded data into the K second target branch adaptation layers in the second target model for processing, to obtain first data

407: Send the first data

First data →

408: Receive the first data

409: Input the first data into the K first target branch adaptation layers for processing, to obtain processed data

FIG. 4

FIG. 5a

| Frame | | | |
|---|---|---|---|
| Slot #0 | Slot #1 | ... | Slot |

| Weight feedback | Pilot | Data transmission |
|---|---|---|

| Weight feedback | Data transmission |
|---|---|

FIG. 5b

Train an initial channel feature extraction network, to obtain a first target channel feature extraction network and a first channel dictionary set — 601

Train N initial branch adaptation layers based on a target encoding network and a target decoding network, to obtain N first target branch adaptation layers, where N is a quantity of first target branch adaptation layers in the first channel dictionary set — 602

Train an initial sparse gating module based on the target encoding network, the target decoding network, the first target channel feature extraction network, and the N first target branch adaptation layers, to obtain a target sparse gating module — 603

FIG. 6a

FIG. 6b

FIG. 7a

FIG. 7b

FIG. 8

## INTERNATIONAL SEARCH REPORT

| International application No. |
| --- |
| **PCT/CN2022/132654** |

| A. | CLASSIFICATION OF SUBJECT MATTER |
| --- | --- |

H04L 27/00(2006.01)i

According to International Patent Classification (IPC) or to both national classification and IPC

| B. | FIELDS SEARCHED |
| --- | --- |

Minimum documentation searched (classification system followed by classification symbols)

IPC: H04L,H04B,H04W,H04Q,G06N

Documentation searched other than minimum documentation to the extent that such documents are included in the fields searched

Electronic data base consulted during the international search (name of data base and, where practicable, search terms used)

CNABS, CNTXT, ENTXTC, EPTXT, USTXT, WOTXT, WPABSC, 3GPP: 比例, 比重, 编码器, 变化, 参考信号, 导频, 发送, 反馈, 分支, 模型, 权值, 权重, 人工智能, 神经网络, 系数, 信道, 训练, 占比, 支路, 终端, 自适应, 层, RS, reference, channel, change, pilot, feedback, transmit, model, TDL, CDL, AI, ML, DNN, layer, weight, coefficient, train+

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | WO 2022040160 A2 (QUALCOMM INC.) 24 February 2022 (2022-02-24) <br> description, paragraphs [0064]-[0143] and [0252]-[0258], and figures 1, 2, and 11 | 1-112 |
| A | CN 111819892 A (SAMSUNG ELECTRONICS CO., LTD.) 23 October 2020 (2020-10-23) <br> entire document | 1-112 |
| A | CN 115136505 A (QUALCOMM INC.) 30 September 2022 (2022-09-30) <br> entire document | 1-112 |
| A | EP 4068169 A1 (HUAWEI TECHNOLOGIES CO., LTD.) 05 October 2022 (2022-10-05) <br> entire document | 1-112 |
| A | US 2019268185 A1 (ZTE CORP.) 29 August 2019 (2019-08-29) <br> entire document | 1-112 |
| A | WO 2021051987 A1 (HUAWEI TECHNOLOGIES CO., LTD.) 25 March 2021 (2021-03-25) <br> entire document | 1-112 |

☑ Further documents are listed in the continuation of Box C. ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **06 July 2023** | **12 July 2023** |

| Name and mailing address of the ISA/CN | Authorized officer |
| --- | --- |
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| | International application No. |
|---|---|
| | **PCT/CN2022/132654** |

**C.      DOCUMENTS CONSIDERED TO BE RELEVANT**

| Category* | Citation of document, with indication, where appropriate, of the relevant passages | Relevant to claim No. |
|---|---|---|
| A | ERICSSON. "Addition of indoor industrial channel model" *3GPP TSG-WG1 Meeting #97 R1-1907919*, 17 May 2019 (2019-05-17), entire document | 1-112 |

Form PCT/ISA/210 (second sheet) (July 2022)

**INTERNATIONAL SEARCH REPORT**
Information on patent family members

International application No.

**PCT/CN2022/132654**

| Patent document cited in search report | | | Publication date (day/month/year) | Patent family member(s) | | | Publication date (day/month/year) |
|---|---|---|---|---|---|---|---|
| WO | 2022040160 | A2 | 24 February 2022 | CN | 116057898 | A | 02 May 2023 |
| | | | | IN | 202247077146 | A | 06 January 2023 |
| CN | 111819892 | A | 23 October 2020 | EP | 3721663 | A1 | 14 October 2020 |
| | | | | WO | 2019172639 | A1 | 12 September 2019 |
| | | | | US | 2019277957 | A1 | 12 September 2019 |
| CN | 115136505 | A | 30 September 2022 | WO | 2021173331 | A1 | 02 September 2021 |
| | | | | US | 2021273707 | A1 | 02 September 2021 |
| | | | | EP | 4111599 | A1 | 04 January 2023 |
| | | | | IN | 202227041238 | A | 23 September 2022 |
| EP | 4068169 | A1 | 05 October 2022 | WO | 2021135707 | A1 | 08 July 2021 |
| | | | | US | 2023042397 | A1 | 09 February 2023 |
| US | 2019268185 | A1 | 29 August 2019 | CA | 3067089 | A1 | 04 April 2019 |
| | | | | KR | 20200012965 | A | 05 February 2020 |
| | | | | WO | 2019062399 | A1 | 04 April 2019 |
| | | | | BR | 112019025982 | A2 | 07 July 2020 |
| | | | | JP | 2020526960 | A | 31 August 2020 |
| | | | | EP | 3691164 | A1 | 05 August 2020 |
| | | | | RU | 2726150 | C1 | 09 July 2020 |
| | | | | AU | 2018342485 | A1 | 02 January 2020 |
| | | | | US | 2020186393 | A1 | 11 June 2020 |
| | | | | CN | 108111282 | A | 01 June 2018 |
| | | | | IN | 201947053648 | A | 28 February 2020 |
| WO | 2021051987 | A1 | 25 March 2021 | CN | 112529146 | A | 19 March 2021 |

Form PCT/ISA/210 (patent family annex) (July 2022)